# EUROPEAN PATENT APPLICATION

(11) **EP 3 324 702 A1**
(43) Date of publication of application: **23.05.2018**
(21) Application number: 15901369.7
(22) Date of filing: 17.08.2015
(51) Int. Cl.: H04W 88/14

(54) **CIRCUIT SWITCHED FALLBACK METHOD AND APPARATUS**

(71) Applicant: Huawei Technologies Co., Ltd., Longgang District Shenzhen, Guangdong 518129 (CN)
(72) Inventor: CHONG, Weiwei, Shenzhen Guangdong 518129 (CN)
(74) Representative: Goddar, Heinz J.
(86) International application number: PCT/CN2015/087264
(87) International publication number: WO 2017/028164

(57) **Abstract**

Embodiments of this application provide a circuit switched fallback (CSFB) method and apparatus. The method includes: learning, by a source access network device, that CSFB needs to be performed on a terminal, where performing the CSFB on the terminal includes moving the terminal from a first standard network to a second standard network; determining, by the source access network device before completing moving of the terminal from the first standard network to the second standard network, that a serving cell handover needs to be performed on the terminal in the first standard network; and performing, by the source access network device, the serving cell handover on the terminal, where the source access network device sends CSFB information to a target access network device in a process of the serving cell handover, and the CSFB information is used for the target access network device to perform the CSFB on the terminal. According to technical solutions in the embodiments of this application, a problem that a voice service of the terminal is omitted because a CSFB procedure conflicts with a serving cell handover procedure can be avoided.

## Description

### TECHNICAL FIELD

The present invention relates to communications technologies, and in particular, to a circuit switched fallback method and apparatus.

### BACKGROUND

In current mobile communications networks, a second generation (The Second Generation, 2G for short) network and a third generation (The Third Generation, 3G for short) network have separately achieved full coverage. With development of Long Term Evolution (Long Term Evolution, LTE for short) network technologies, an LTE network starts to cover traffic hotspot areas, and coexists with the 2G network or the 3G network. When a terminal that camps in the LTE network needs to perform a voice service, the terminal falls back from the LTE network to the 2G network or the 3G network, so as to complete processing of the voice service. This technology is also referred to as a circuit switched fallback (Circuit Switched Fallback, CSFB for short) technology. However, the applicant finds that in a process in which the terminal falls back from the LTE network to the 2G network or the 3G network, if the terminal triggers a serving cell handover because of movement, the voice service of the terminal is often omitted.

### SUMMARY

Embodiments of the present invention provide a circuit switched fallback CSFB method and apparatus, so as to resolve a problem that in a CSFB process, a voice service is omitted because a serving cell handover is performed on a terminal.

A first aspect provides a circuit switched fallback CSFB method, including:
learning, by a source access network device, that CSFB needs to be performed on a terminal, where performing the CSFB on the terminal includes moving the terminal from a first standard network to a second standard network;
determining, by the source access network device before completing moving of the terminal from the first standard network to the second standard network, that a serving cell handover needs to be performed on the terminal in the first standard network; and
performing, by the source access network device, the serving cell handover on the terminal; where
the performing, by the source access network device, the serving cell handover on the terminal includes:
sending, by the source access network device, CSFB information to a target access network device, where the CSFB information is used to instruct the target access network device to perform the CSFB on the terminal.

A second aspect provides a CSFB method, including:
receiving, by a target access network device in a process of a serving cell handover of a terminal, CSFB information sent by a source access network device, where the CSFB information is used to instruct the target access network device to perform CSFB on the terminal; and
performing, by the target access network device, the CSFB on the terminal according to the CSFB information after the terminal is handed over to the target access network device.

A third aspect provides a CSFB method, including:
learning, by a source access network device, that CSFB needs to be performed on a terminal, where performing the CSFB on the terminal includes moving the terminal from a first standard network to a second standard network;
determining, by the source access network device before completing moving of the terminal from the first standard network to the second standard network, that a serving cell handover needs to be performed on the terminal in the first standard network; and
performing, by the source access network device, the serving cell handover on the terminal; where
the performing, by the source access network device, the serving cell handover on the terminal includes:
   sending, by the source access network device, CSFB information to a mobility management network element, where the CSFB information is used to instruct the mobility management network element to initiate the CSFB on the terminal after the terminal is handed over to a target access network device.

A fourth aspect provides a CSFB method, including:
receiving, by a target access network device in a process of a serving cell handover of a terminal, CSFB information sent by a source access network device; and
sending, by the target access network device, the CSFB information to a mobility management network element, where the CSFB information is used to instruct the mobility management network element to initiate CSFB on the terminal after the terminal is handed over to the target access network device.

A fifth aspect provides a CSFB method, including:
sending, by a mobility management network element, CSFB instruction information to a source access network device, where the CSFB instruction information is used to instruct the source access network device to perform CSFB on a terminal, and performing the CSFB on the terminal includes moving the terminal from a first standard network to a second standard network;
if the source access network device performs a serving cell handover on the terminal in the first standard network before completing moving of the terminal from the first standard network to the second standard network, receiving, by the mobility management network element in a process of handing over the terminal from the source access network device to a target access network device, CSFB information sent by the source access network device;
sending, by the mobility management network element, the CSFB information to the target access network device, where the CSFB information is used to instruct the target access network device to perform the CSFB on the terminal; and
after the terminal is handed over to the target access network device, receiving, by the mobility management network element, a handover request message sent by the target access network device, and performing the CSFB on the terminal.

A sixth aspect provides a CSFB method, including:
sending, by a mobility management network element, CSFB instruction information to a source access network device, where the CSFB instruction information is used to instruct the source access network device to perform CSFB on a terminal, and performing the CSFB on the terminal includes moving the terminal from a first standard network to a second standard network;
if the source access network device performs a serving cell handover on the terminal in the first standard network before completing moving of the terminal from the first standard network to the second standard network, receiving, by the mobility management network element in a process of handing over the terminal from the source access network device to a target access network device, CSFB information sent by the source access network device, where the CSFB information is used to instruct the mobility management network element to initiate the CSFB on the terminal after the terminal is handed over to the target access network device; and
initiating, by the mobility management network element, the CSFB on the terminal after the terminal is handed over to the target access network device.

A seventh aspect provides a CSFB method, including:
receiving, by a target mobility management network element in a process of a serving cell handover of a terminal, CSFB information sent by a source mobility management network element;
sending, by the target mobility management network element, the CSFB information to a target access network device that is connected to the target mobility management network element, where the CSFB information is used to instruct the target access network device to perform CSFB on the terminal; and
after the terminal is handed over to the target access network device, receiving, by the target mobility management network element, a handover request message sent by the target access network device, and performing the CSFB on the terminal.

An eighth aspect provides a CSFB method, including:
receiving, by a target mobility management network element in a process of a serving cell handover of a terminal, CSFB information sent by a source mobility management network element, where the CSFB information is used to instruct the target mobility management network element to initiate CSFB on the terminal; and
initiating, by the target mobility management network element, the CSFB on the terminal after the terminal is handed over to a target access network device.

A ninth aspect provides a CSFB method, including:
learning, by an access network device, that CSFB needs to be performed on a terminal, where performing the CSFB on the terminal includes moving the terminal from a first standard network to a second standard network;
determining, by the access network device before completing moving of the terminal from the first standard network to the second standard network, that a serving cell handover needs to be performed on the terminal in the first standard network; and
sending, by the access network device, a radio resource control RRC connection release message to the terminal, where the RRC connection release message is used to perform emergency blind redirection-based CSFB on the terminal.

A tenth aspect provides a CSFB apparatus, including a processor and a network interface, where
the processor is configured to: learn that CSFB needs to be performed on a terminal, and move the terminal from a first standard network to a second standard network when the CSFB is performed on the terminal; and before completing moving of the terminal from the first standard network to the second standard network, determine that a serving cell handover needs to be performed on the terminal in the first standard network; and is further configured to perform the serving cell handover on the terminal; and
the network interface is configured to send CSFB information to a target access network device in a process of the serving cell handover, where the CSFB information is used to instruct the target access network device to perform the CSFB on the terminal.

An eleventh aspect provides a CSFB apparatus, including a processor and a network interface, where
the network interface is configured to receive, in a process of a serving cell handover of a terminal, CSFB information sent by a source access network device, where the CSFB information is used to instruct the CSFB apparatus to perform CSFB on the terminal; and
the processor is configured to perform the CSFB on the terminal according to the CSFB information after the terminal is handed over to the CSFB apparatus.

A twelfth aspect provides a CSFB apparatus, including a processor and a network interface, where
the processor is configured to: learn that CSFB needs to be performed on a terminal, where performing the CSFB on the terminal includes moving the terminal from a first standard network to a second standard network; and before completing moving of the terminal from the first standard network to the second standard network, determine that a serving cell handover needs to be performed on the terminal in the first standard network; and is further configured to perform the serving cell handover on the terminal; and
the network interface is configured to send CSFB information to a mobility management network element in a process of the serving cell handover, where the CSFB information is used to instruct the mobility management network element to initiate the CSFB on the terminal after the terminal is handed over to a target access network device.

A thirteenth aspect provides a CSFB apparatus, including a network interface, where the network interface is configured to receive, in a process of a serving cell handover of a terminal, CSFB information sent by a source access network device; and the network interface is further configured to send the CSFB information to a mobility management network element, where the CSFB information is used to instruct the mobility management network element to initiate CSFB on the terminal after the terminal is handed over to the CSFB apparatus.

A fourteenth aspect provides a CSFB apparatus, including a processor and a network interface, where
the network interface is configured to: send CSFB instruction information to a source access network device, where the CSFB instruction information is used to instruct the source access network device to perform CSFB on a terminal, and performing the CSFB on the terminal includes moving the terminal from a first standard network to a second standard network; and if the source access network device performs a serving cell handover on the terminal in the first standard network before completing moving of the terminal from the first standard network to the second standard network, receive, in a process of handing over the terminal from the source access network device to a target access network device, CSFB information sent by the source access network device; and is further configured to: send the CSFB information to the target access network device, where the CSFB information is used to instruct the target access network device to perform the CSFB on the terminal; and after the terminal is handed over to the target access network device, receive a handover request message sent by the target access network device; and
the processor is configured to perform the CSFB on the terminal.

A fifteenth aspect provides a CSFB apparatus, including a processor and a network interface, where
the network interface is configured to send CSFB instruction information to a source access network device, where the CSFB instruction information is used to instruct the source access network device to perform CSFB on a terminal, and performing the CSFB on the terminal includes moving the terminal from a first standard network to a second standard network; and is further configured to: if the source access network device performs a serving cell handover on the terminal in the first standard network before completing moving of the terminal from the first standard network to the second standard network, receive, in a process of handing over the terminal from the source access network device to a target access network device, CSFB information sent by the source access network device, where the CSFB information is used to instruct the CSFB apparatus to initiate the CSFB on the terminal after the terminal is handed over to the target access network device; and
the processor is configured to initiate the CSFB on the terminal after the terminal is handed over to the target access network device.

A sixteenth aspect provides a CSFB apparatus, including a processor and a network interface, where
the network interface is configured to receive, in a process of a serving cell handover of a terminal, CSFB information sent by a source mobility management network element; and is further configured to: send the CSFB information to a target access network device that is connected to the CSFB apparatus, where the CSFB information is used to instruct the target access network device to perform CSFB on the terminal; and after the terminal is handed over to the target access network device, receive a handover request message sent by the target access network device; and
the processor is configured to perform the CSFB on the terminal.

A seventeenth aspect provides a CSFB apparatus, including a processor and a network interface, where
the network interface is configured to receive, in a process of a serving cell handover of a terminal, CSFB information sent by a source mobility management network element, where the CSFB information is used to instruct the CSFB apparatus to initiate CSFB on the terminal; and
the processor is configured to initiate the CSFB on the terminal after the terminal is handed over to the target access network device.

In the embodiments of the present invention, in the process of performing the CSFB on the terminal, if the source access network device determines that the serving cell handover needs to be performed on the terminal, the source access network device performs the serving cell handover on the terminal, and sends the CSFB information to the target access network device in the process of performing the serving cell handover on the terminal, so that the target access network device performs the CSFB on the terminal after the terminal is handed over to the target access network device. Therefore, according to the method in the embodiments of the present invention, a problem that a voice service of the terminal is omitted because a CSFB procedure conflicts with a serving cell handover procedure can be avoided.

### BRIEF DESCRIPTION OF DRAWINGS

To describe the technical solutions in the embodiments of the present invention more clearly, the following briefly describes the accompanying drawings required for describing the embodiments. The accompanying drawings in the following description show some embodiments of the present invention, and persons of ordinary skill in the art can derive other drawings from these accompanying drawings without creative efforts.
FIG 1 is a flowchart of a CSFB method according to a first embodiment of the present invention;
FIG. 2A and FIG. 2B are a schematic diagram of a CSFB method according to a second embodiment of the present invention;
FIG. 3A and FIG. 3B are a schematic diagram of a CSFB method according to a third embodiment of the present invention;
FIG. 4A and FIG. 4B are a schematic diagram of a CSFB method according to a fourth embodiment of the present invention;
FIG. 5A and FIG. 5B are a schematic diagram of a CSFB method according to a fifth embodiment of the present invention;
FIG. 6A and FIG 6B are a schematic diagram of a CSFB method according to a sixth embodiment of the present invention;
FIG. 7A and FIG. 7B are a schematic diagram of a CSFB method according to a seventh embodiment of the present invention;
FIG. 8A and FIG. 8B are a schematic diagram of a CSFB method according to an eighth embodiment of the present invention;
FIG. 9 is a schematic diagram of a CSFB method according to a ninth embodiment of the present invention;
FIG. 10 is a schematic diagram of a communications system according to a tenth embodiment of the present invention; and
FIG 11 is a schematic diagram of a communications system according to an eleventh embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A first standard network mentioned in the embodiments of the present invention may be a Long Term Evolution (Long Term Evolution, LTE for short) network, and a second standard network may be a 2G network or a 3G network, for example, a Global System for Mobile Communications (Global System for Mobile Communications, GSM for short) network, a Code Division Multiple Access (Code Division Multiple Access, CDMA for short) network, a Time Division Multiple Access (Time Division Multiple Access, TDMA for short) network, a Wideband Code Division Multiple Access (Wideband Code Division Multiple Access Wireless, WCDMA for short) network, a Frequency Division Multiple Access (Frequency Division Multiple Access, FDMA for short) network, an orthogonal frequency division multiple access (Orthogonal Frequency-Division Multiple Access, OFDMA for short) network, a single carrier frequency division multiple access (Single Carrier Frequency Division Multiple Access, SC-FDMA for short) network, a general packet radio service (General Packet Radio Service, GPRS for short) network, or another communications network of this type. Optionally, the first standard network in the embodiments of the present invention may be a new generation mobile communications network, for example, a fifth generation (The Fifth Generation, 5G for short) mobile communications network. The second standard network may be a network that can perform a CS service (for example, a voice service).

A terminal mentioned in the embodiments of the present invention may be a wireless terminal. The wireless terminal may be a device that provides a user with voice or data connectivity, a handheld device with a wireless connection function, or another processing device connected to a wireless modem. The wireless terminal may communicate with one or more core networks by using a radio access network (for example, Radio Access Network, RAN for short). The wireless terminal may be a mobile terminal, such as a mobile phone (or referred to as a "cellular" phone) and a computer with a mobile terminal. For example, the wireless terminal may be a portable, pocket-sized, handheld, computer built-in, or in-vehicle mobile apparatus, which exchanges voice or data with the radio access network. For example, the wireless terminal may be a device such as a personal communications service (Personal Communication Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may also be referred to as a system, a subscriber unit (Subscriber Unit), a subscriber station (Subscriber Station), a mobile station (Mobile Station), a mobile console (Mobile), a remote station (Remote Station), an access point (Access Point, AP for short), a remote terminal (Remote Terminal), an access terminal (Access Terminal), a user terminal (User Terminal), a user agent (User Agent), a user device (User Device), or user equipment (User Equipment, UE for short).

In the embodiments of the present invention, an access network device may be a base station device, or may be a combination of a base station device and a control device of the base station device. The control device of the base station device may be a base station controller (Base Station Controller, BSC for short) in a GSM system or a CDMA system, or may be a radio network controller (Radio Network Controller, RNC for short) in a WCDMA system, or may be a centralized server in various communications systems, or the like. It should be noted that in the GSM system, the base station device may be a base transceiver station (Base Transceiver Station, BTS for short); in a UMTS system, the base station device may be a NodeB; in an LTE system, the base station device may be an evolved NodeB (eNodeB). It should be understood that the access network device in the embodiments of the present invention includes both an access network device in an existing communications system and an access network device in a future communications system. This is not limited in the embodiments of the present invention.

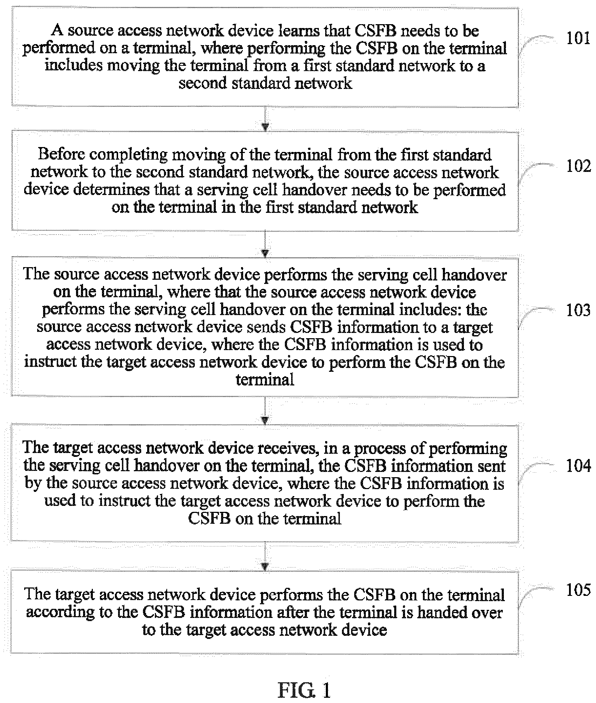

FIG. 1 is a flowchart of a CSFB method according to a first embodiment of the present invention. As shown in FIG. 1, the method in this embodiment includes the following steps.

101. A source access network device learns that CSFB needs to be performed on a terminal, where performing the CSFB on the terminal includes moving the terminal from a first standard network to a second standard network.

Optionally, the source access network device may be a first access network device.

Optionally, the source access network device receives a request message sent by a mobility management network element. The request message includes a CSFB indicator (indicator) information element, and the CSFB indicator information element is used to instruct the source access network device to perform the CSFB on the terminal. Optionally, the request message includes an S1-AP user context update request message or an S1-AP initial user context setup request message. The S1-AP user context update request message or the S1-AP initial user context setup request message includes the CSFB indicator information element. The source access network device learns, according to the S1-AP user context update request message or the S1-AP initial user context setup request message, that the CSFB needs to be performed on the terminal. Optionally, in a standard defined in the 3rd Generation Partnership Project (3rd Generation Partnership Project, 3GPP for short), a message corresponding to the S1-AP user context update request message is an S1-AP UE context modification request message, and a message corresponding to the S1-AP initial user context setup request message is an S1-AP initial UE context setup request message.

Optionally, after the source access network device receives the request message sent by the mobility management network element, the source access network device further sends a response message of the request message to the mobility management network element. Optionally, the response message includes an S1-AP user context update response message or an S1-AP initial user context setup response message. Optionally, in a standard defined in 3GPP, a message corresponding to the S1-AP user context update response message is an S1-AP UE context modification response message, and a message corresponding to the S1-AP initial user context setup response message is an S1-AP initial UE context setup response message. Optionally, if the mobility management network element fails to receive the S1-AP user context update response message or the S1-AP initial user context setup response message, the mobility management network element sends the S1-AP user context update request message or the S1-AP initial user context setup request message to the source access network device again.

In subsequent embodiments of the present invention, an example in which the request message is the S1-AP user context update request message or the S1-AP initial user context setup request message, and the response message is the S1-AP user context update response message or the S1-AP initial user context setup response message is used for description. For ease of description, the S1-AP user context update request message or the S1-AP initial user context setup request message may also be referred to as an S1-AP request message, and the S1-AP user context update response message or the S1-AP initial user context setup response message may also be referred to as an S1-AP response message.

Optionally, the S1-AP request message further includes at least one of a location area identity (Location Area Identity, LAI for short), a single radio voice call continuity (Single Radio Voice Call Continuity, SRVCC for short)-based enhanced circuit switched fallback (evolved CSFB, eCSFB for short) operation possible information element (operation possible information element), and terminal radio capability (radio capability) information.

Optionally, after sending the S1-AP response message to the mobility management network element, the source access network device may perform the CSFB on the terminal according to the at least one of the LAI, the SRVCC-based eCSFB operation possible information element, and the terminal radio capability information in one of the following manners:

Manner 1 is a packet switched (Packet Switched, PS for short) handover-based manner: In a CSFB process, if an access network device determines that the terminal and a network side support a PS handover, and the terminal is currently performing a PS service, the source access network device sends a first handover request message to the mobility management network element, and the first handover request message carries a handover type information element. In this manner, the handover type information element indicates that a handover type is the PS handover, and the first handover request message is used to trigger the PS handover on the terminal. After receiving the first handover request message, the mobility management network element sends a handover command to the terminal by using the source access network device, so that the PS handover is performed on the terminal, and the terminal moves from the first standard network to the second standard network. In a PS handover process, a corresponding PS domain resource is prepared in the second standard network.

Manner 2 is an SRVCC handover-based manner: In a CSFB process, if the source access network device determines, according to the SRVCC-based eCSFB operation possible information element or the terminal radio capability information, that the terminal and a network side support an SRVCC handover, the source access network device sends a first handover request message to the mobility management network element. In this manner, a handover type information element carried in the first handover request message indicates that a handover type is the SRVCC handover, and the first handover request message is used to trigger the SRVCC handover on the terminal. After receiving the first handover request message, the mobility management network element sends a handover command to the terminal by using the source access network device, so that the SRVCC handover is performed on the terminal, and the terminal moves from the first standard network to the second standard network. Before the SRVCC handover is performed on the terminal, a corresponding CS domain resource is prepared in advance in the second standard network. Therefore, a CSFB procedure can be accelerated in the SRVCC handover-based manner.

Manner 3 is an inter-RAT cell change order (Cell Change Order, CCO for short)-based manner: In a CSFB process, if the source access network device determines that the terminal and a network side support an inter-RAT cell change order, and a cell in the second standard network is an inter-RAT cell, the source access network device sends a cell change order message to the terminal, and the CCO message includes identifier information of the cell in the second standard network, so that the terminal moves to the second standard network according to the identifier information.

Manner 4 is a redirection-based manner: In a CSFB process, if the source access network device determines that the terminal or a network side does not support a PS handover or an SRVCC handover or an inter-RAT cell change order, or the redirection-based manner is used because of an operator policy configuration, the source access network device sends a radio resource control connection release (RRC connection release) message to the terminal, and the RRC connection release message includes frequency information of the second standard network, so that the terminal moves to the second standard network according to the frequency information.

102. Before completing moving of the terminal from the first standard network to the second standard network, the source access network device determines that a serving cell handover needs to be performed on the terminal in the first standard network.

Optionally, before completing moving of the terminal from the first standard network to the second standard network, the source access network device receives a measurement report sent by the terminal, and the source access network device determines, according to the measurement report, that the serving cell handover needs to be performed on the terminal in the first standard network. For example, the source access network device may determine, according to the measurement report, that the terminal meets a handover condition of the serving cell handover, and then determine that the serving cell handover needs to be performed on the terminal in the first standard network. Optionally, the terminal sends the measurement report to the source access network device when the terminal meets a measurement reporting condition. For example, the terminal sends the measurement report to the source access network device because the terminal moves to a coverage area of a target access network device or signal quality of a coverage area that is of the source access network device and in which the terminal is located weakens.

Optionally, after the source access network device sends the S1-AP response message to the mobility management network element, and before the source access network device determines that the serving cell handover needs to be performed on the terminal in the first standard network, if the terminal starts neither the PS handover nor the SRVCC handover, the source access network device triggers a serving cell handover preparation procedure after determining that the serving cell handover needs to be performed on the terminal in the first standard network, so as to interrupt the CSFB.

Optionally, after the source access network device sends the S1-AP response message to the mobility management network element, and before the source access network device determines that the serving cell handover needs to be performed on the terminal in the first standard network, if the terminal has started the PS handover, the source access network device further terminates the PS handover on the terminal after determining that the serving cell handover needs to be performed on the terminal in the first standard network. Then the source access network device triggers a serving cell handover preparation procedure, so as to interrupt the CSFB. Alternatively, after the source access network device sends the S1-AP response message to the mobility management network element, and before the source access network device determines that the serving cell handover needs to be performed on the terminal in the first standard network, if the terminal has started the SRVCC handover, the source access network device further terminates the SRVCC handover on the terminal after determining that the serving cell handover needs to be performed on the terminal in the first standard network. Then the source access network device triggers a serving cell handover preparation procedure, so as to interrupt the CSFB.

Optionally, before the mobility management network element sends the S1-AP request message to the source access network device, the mobility management network element further receives an extended service request (extended service request) message sent by the terminal. The extended service request message is sent by the terminal to the mobility management network element when the terminal initiates a voice service (including a mobile originated service and a mobile terminated service) in a first network.

Optionally, the source access network device and the target access network device may be connected to a same mobility management network element, or may be connected to different mobility management network elements. The following describes a case in which the source access network device and the target access network device are connected to a same mobility management network element.

103. The source access network device performs the serving cell handover on the terminal, where that the source access network device performs the serving cell handover on the terminal includes: the source access network device sends CSFB information to a target access network device, where the CSFB information is used to instruct the target access network device to perform the CSFB on the terminal.

Optionally, the target access network device may be a second access network device.

Optionally, the source access network device may send the CSFB information to the target access network device before the serving cell handover or after the serving cell handover.

Optionally, the CSFB information is included in a source to target transparent container (source to target transparent container) information element or user context information. In a standard defined in 3GPP, information corresponding to the user context information is UE context information.

Optionally, the CSFB information includes the CSFB indicator information element. The CSFB indicator information element is used to instruct the target access network device to perform the CSFB on the terminal.

Optionally, the CSFB information includes a CSFB-uncompleted information element, and the CSFB-uncompleted information element is used to notify the target access network device that the source access network device has not completed the CSFB on the terminal.

Optionally, the CSFB information further includes at least one of a LAI, an SRVCC-based eCSFB operation possible information element, terminal radio capability information, and CSFB execution mode information. The CSFB execution mode information is used to instruct the target access network device to perform the CSFB on the terminal in a manner determined by the source access network device. Optionally, the CSFB execution mode information includes a handover type information element. The handover type information element is corresponding to a type of a handover performed on the terminal in step 101, that is, the PS handover or the SRVCC handover.

Optionally, before sending the CSFB information to the target access network device, the source access network device determines whether an X2 interface is deployed between the source access network device and the target access network device.

If the target access network device and the source access network device are connected to a same mobility management network element, when the CSFB information includes the CSFB indicator information element, the source access network device may send the CSFB information to the target access network device in either of the following two manners: In Manner 1, if an X2 interface is deployed between the source access network device and the target access network device, the source access network device sends a second handover request message to the target access network device by using the X2 interface, and the second handover request message includes the CSFB indicator information element. In Manner 2, if no X2 interface is deployed between the source access network device and the target access network device, the source access network device sends a third handover request message to the mobility management network element by using an S1 interface, so that the mobility management network element sends the CSFB indicator information element to the target access network device, and the third handover request message includes the CSFB indicator information element. That is, in Manner 2, if the source access network device performs the serving cell handover on the terminal in the first standard network before the source access network device completes moving of the terminal from the first standard network to the second standard network, the mobility management network element receives, in a process of handing over the terminal from the source access network device to the target access network device, the CSFB information sent by the source access network device. Then, the mobility management network element sends the CSFB information to the target access network device. The CSFB information is used to instruct the target access network device to perform the CSFB on the terminal after the terminal is handed over to the target access network device.

When the CSFB information includes the CSFB indicator information element, and the X2 interface is deployed between the source access network device and the target access network device, only the target access network device needs to correspondingly change, but the mobility management network element or a target mobility management network element does not need to change in the method in this embodiment. Therefore, in specific implementation, a deployment speed is relatively fast, and costs are relatively low.

When the CSFB information includes the CSFB-uncompleted information element, if the source access network device performs the serving cell handover on the terminal in the first standard network before the source access network device completes moving of the terminal from the first standard network to the second standard network, the mobility management network element receives, in a process of handing over the terminal from the source access network device to the target access network device, the CSFB information sent by the source access network device. The CSFB information is used to instruct the mobility management network element to initiate the CSFB on the terminal after the terminal is handed over to the target access network device. When the source access network device sends the CSFB information to the mobility management network element, the following manners may be used:

If the target access network device and the source access network device are connected to a same mobility management network element, when the CSFB information includes the CSFB-uncompleted information element, and an X2 interface is deployed between the source access network device and the target access network device, the source access network device sends the CSFB information to the target access network device in a process of performing the serving cell handover on the terminal. For example, the source access network device sends a second handover request message to the target access network device by using the X2 interface, and the second handover request message includes the CSFB-uncompleted information element. Correspondingly, the target access network device receives, in the process of performing the serving cell handover on the terminal, the CSFB information sent by the source access network device. After receiving the CSFB information, the target access network device learns, according to the CSFB-uncompleted information element in the CSFB information, that the source access network device has not completed the CSFB on the terminal. Then the target access network device sends the CSFB information to the mobility management network element. The CSFB information is used to instruct the mobility management network element to initiate the CSFB on the terminal after the terminal is handed over to the target access network device. For example, after the terminal is handed over to a serving cell of the target access network device, the target access network device sends a path switch request message to the mobility management network element, so that the mobility management network element switches a downlink user plane data path to the serving cell of the target access network device, so as to complete the serving cell handover. The path switch request message includes the CSFB-uncompleted information element, and the CSFB-uncompleted information element is used to notify the mobility management network element that the source access network device has not completed the CSFB on the terminal. Correspondingly, the mobility management network element receives the path switch request message sent by the target access network device, determines, according to the path switch request message, that the terminal is handed over to the target access network device, and learns, according to the CSFB-uncompleted information element, that the CSFB needs to be performed on the terminal.

If the target access network device and the source access network device are connected to a same mobility management network element, when the CSFB information includes the CSFB-uncompleted information element, and no X2 interface is deployed between the source access network device and the target access network device, the source access network device sends a third handover request message to the mobility management network element by using an S1 interface, and the third handover request message includes the CSFB-uncompleted information element. Correspondingly, the mobility management network element receives the third handover request message, and learns, according to the CSFB-uncompleted information element, that the CSFB needs to be performed on the terminal. After the terminal is handed over to a serving cell of the target access network device, the target access network device sends a handover notification message to the mobility management network element, so that the mobility management network element switches a downlink user plane data path to the serving cell of the target access network device, so as to complete the serving cell handover. Correspondingly, the mobility management network element receives the handover notification message sent by the target access network device, and learns, according to the handover notification message, that the terminal is handed over to the target access network device.

When the CSFB information includes the CSFB-uncompleted information element, the mobility management network element initiates the CSFB on the terminal after the terminal is handed over to the target access network device. The mobility management network element sends the S1-AP request message to the target access network device, so that the target access network device learns that the CSFB needs to be performed on the terminal. A process in which the target access network device performs the CSFB on the terminal after receiving the S1-AP request message sent by the mobility management network element is similar to a process in which the source access network device performs the CSFB on the terminal in step 101. It should be noted that the S1-AP request message sent by the mobility management network element to the target access network device includes the CSFB indicator information element, and may further include the at least one of the LAI, the SRVCC-based eCSFB operation possible information element, the terminal radio capability information, and the CSFB execution mode information.

104. The target access network device receives, in a process of performing the serving cell handover on the terminal, the CSFB information sent by the source access network device, where the CSFB information is used to instruct the target access network device to perform the CSFB on the terminal.

For content that is in this step and that is corresponding to that in step 103, refer to detailed descriptions in step 103. Details are not described herein again.

When the source access network device and the target access network device are connected to a same mobility management network element, when the CSFB information includes the CSFB indicator information element, the target access network device may receive the second handover request message sent by the source access network device by using the X2 interface, and the second handover request message includes the CSFB indicator information element; or the target access network device may receive the CSFB indicator information element sent by the source access network device by using the mobility management network element, the CSFB indicator information element is obtained after the mobility management network element receives a third handover request sent by the source access network device by using the S1 interface, and the third handover request message includes the CSFB indicator information element.

Optionally, when the target access network device receives the CSFB information that is sent by the source access network device by using the X2 interface and that includes the CSFB indicator information element, after the terminal is handed over to the serving cell of the target access network device, the target access network device sends the path switch request message to the mobility management network element, so that the mobility management network element switches the downlink user plane data path to the serving cell of the target access network device, so as to complete the serving cell handover. When the target access network device receives the CSFB information that is sent by the source access network device by using the S1 interface and that includes the CSFB indicator information element, after the terminal is handed over to the serving cell of the target access network device, the target access network device sends the handover notification message to the mobility management network element, so that the mobility management network element switches the downlink user plane data path to the serving cell of the target access network device, so as to complete the serving cell handover.

105. The target access network device performs the CSFB on the terminal according to the CSFB information after the terminal is handed over to the target access network device.

Optionally, after the terminal is handed over to the serving cell of the target access network device, the target access network device receives a handover confirm (handover confirm) message or an RRC reconfiguration complete (RRC reconfiguration complete) message sent by the terminal. The target access network device may learn, according to the handover confirm message or the RRC reconfiguration complete message, that the terminal is handed over to the target access network device. Optionally, the target access network device receives downlink user plane data information sent by a core network gateway device, and the target access network device learns, according to the downlink user plane data information, that the terminal is handed over to the target access network device. Optionally, after the target access network device sends the path switch request message to the mobility management network element, the target access network device receives path switch request acknowledgement information sent by the mobility management network element, and the target access network device learns, according to the path switch request acknowledgement message, that the terminal is handed over to the target access network device.

When the CSFB information includes the CSFB indicator information element, after the target access network device learns that the terminal is handed over to the target access network device, the target access network device may perform the CSFB on the terminal according to the at least one of the LAI, the SRVCC-based eCSFB operation possible information element, the terminal radio capability information, and the CSFB execution mode information included in the CSFB information, so as to move the terminal from the first standard network to the second standard network. Optionally, when the CFSB information includes the CSFB execution mode information, the target access network device performs the CSFB on the terminal according to the CSFB execution mode information; when the CSFB information does not include the CSFB execution mode information, the target access network device performs the CSFB on the terminal according to at least one of the LAI, the SRVCC-based eCSFB operation possible information element, and the terminal radio capability information in one of the following manners: the PS handover-based manner, the SRVCC handover-based manner, the inter-RAT cell inter-RAT cell change order handover manner, or the redirection-based manner. For a specific implementation process of the several manners, refer to detailed descriptions above. Details are not described herein again.

Optionally, after the terminal is handed over to the target access network device, the mobility management network element performs the CSFB on the terminal. For example, after the terminal is handed over to the target access network device, in the PS handover-based manner or the SRVCC handover-based manner, the mobility management network element performs the CSFB on the terminal after receiving the first handover request message sent by the target access network device.

In this embodiment, in the process of performing the CSFB on the terminal, if the source access network device determines that the serving cell handover needs to be performed on the terminal, the source access network device performs the serving cell handover on the terminal, and sends the CSFB information to the target access network device in the process of performing the serving cell handover on the terminal, so that the target access network device performs the CSFB on the terminal after the terminal is handed over to the target access network device. Therefore, according to the method in this embodiment of the present invention, a problem that a CS service (for example, a voice service) of the terminal is omitted because a CSFB procedure conflicts with a serving cell handover procedure can be avoided.

When the source access network device and the target access network device are connected to different mobility management network elements, a mobility management network element connected to the source access network device is a source mobility management network element, and a mobility management network element connected to the target access network device is a target mobility management network element. In this case, for an operation before the source access network device performs the serving cell handover on the terminal, refer to detailed descriptions in step 101 and step 102. An operation performed by the source mobility management network element is corresponding to an operation performed by the mobility management network element in step 101 and step 102. Other content is not described herein again.

After the source access network device determines that the serving cell handover needs to be performed on the terminal in the first standard network, in the process of performing the serving cell handover on the terminal, if the source access network device determines that an X2 interface is deployed between the source access network device and the target access network device, for operations of the source access network device, the target access network device, and the target mobility management network element, refer to step 103. The target mobility management network element is corresponding to the mobility management network element in step 103.

After the source access network device determines that the serving cell handover needs to be performed on the terminal in the first standard network, in the process of performing the serving cell handover on the terminal, if the source access network device determines that no X2 interface is deployed between the source access network device and the target access network device, the source access network device sends a third handover request message to the source mobility management network element by using an S1 interface, and the third handover request message includes the CSFB information.

After receiving the CSFB information sent by the source access network device, the source mobility management network element sends the CSFB information to the target mobility management network element. Optionally, the source mobility management network element may send the CSFB information to the target mobility management network element in the following manner: The source mobility management network element sends a forward relocation request message or a forward relocation complete confirm message to the target mobility management network element, and the forward relocation request message or the forward relocation complete confirm message includes the CSFB information.

When the CSFB information includes the CSFB indicator information element, the target mobility management network element receives, in the process of performing the serving cell handover on the terminal, the CSFB information sent by the source mobility management network element. Then the target mobility management network element sends the CSFB information to the target access network device, and the CSFB information is used to instruct the target access network device to perform the CSFB on the terminal after the terminal is handed over to the target access network device. After the terminal is handed over to the target access network device, the target access network device learns, according to the CSFB indicator information element included in the CSFB information, that the CSFB needs to be performed on the terminal. Optionally, the target access network device performs the CSFB on the terminal according to the at least one of the LAI, the SRVCC-based eCSFB operation possible information element, the terminal radio capability information, and the CSFB execution mode information included in the CSFB information, so as to move the terminal from the first standard network to the second standard network. For a specific implementation process in which the target access network device performs the CSFB on the terminal, refer to detailed descriptions in step 105. Details are not described herein again.

When the CSFB information includes an uncompleted information element, the target mobility management network element receives, in the process of performing the serving cell handover on the terminal, the CSFB information sent by the source mobility management network element. The CSFB information is used to instruct the target mobility management network element to initiate the CSFB on the terminal after the terminal is handed over to the target access network device. Then the target mobility management network element initiates the CSFB on the terminal after the terminal is handed over to the target access network device. A specific implementation process in which the target mobility management network element initiates the CSFB on the terminal is similar to a process in which the mobility management network element initiates the CSFB on the terminal in step 103. For the specific implementation process, refer to detailed descriptions in step 103. Details are not described herein again.

Optionally, after the terminal is handed over to a serving cell of the target access network device, the target mobility management network element receives a handover notification message sent by the target access network device. The target mobility management network element learns, according to the handover notification message, that the terminal is handed over to the target access network device, and switches a downlink user plane data path to the serving cell of the target access network device, so as to complete the serving cell handover.

In this embodiment, when the source access network device and the target access network device are connected to a same mobility management network element, in the process of performing the CSFB on the terminal, if the source access network device determines that the serving cell handover needs to be performed on the terminal, the source access network device performs the serving cell handover on the terminal, and sends the CSFB information to the target access network device in the process of performing the serving cell handover on the terminal, so that the target access network device performs the CSFB on the terminal after the terminal is handed over to the target access network device. When the source access network device and the target access network device are connected to different mobility management network elements, the source mobility management network element may send the CSFB information to the target mobility management network element in the process of the serving cell handover. When the CSFB information includes the CSFB indicator information element, the target mobility management network element may send the CSFB information to the target access network device, so that the target access network device performs the CSFB on the terminal after the terminal is handed over to the target access network device. When the CSFB information includes the CSFB-uncompleted information element, the target mobility management network element may initiate the CSFB on the terminal after the terminal is handed over to the target access network device. Therefore, even if a CSFB procedure is interrupted by a serving cell handover procedure, a CS service (including a mobile originated service and a mobile terminated service) is not omitted.

Further, even if the terminal has started a handover procedure (for example, the PS handover or the SRVCC handover) before the serving cell handover, the mobility management network element or the target mobility management network element can hand over the terminal to the serving cell of the target access network device after the source access network device terminates the handover procedure. Therefore, the serving cell handover procedure is not shielded by handover (for example, PS handover or SRVCC handover)-based CSFB, and the terminal is not disconnected from a network.

An example in which the first standard network is an LTE network, the second standard network is a GSM network or a WCDMA network, the terminal is UE, and the mobility management network element is a mobility management entity (Mobility Management Entity, MME for short) is used for description in the following. It should be noted that in subsequent embodiments, the following network elements may be further mentioned: a serving gateway (Serving Gateway, SGW for short), a packet data network gateway (Packet Data Network Gateway, PDN GW or PGW for short), an SRVCC mobile switching center (Mobile Switching Center, MSC for short), a target MSC (Target MSC), a base station system (Base Station System, BSS for short), and a radio network subsystem (Radio Network Subsystem, RNS for short).

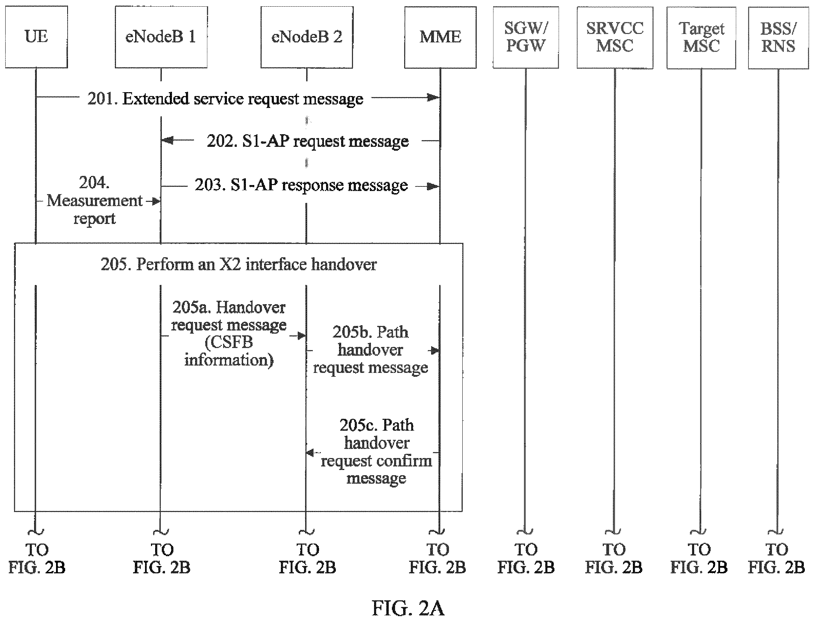

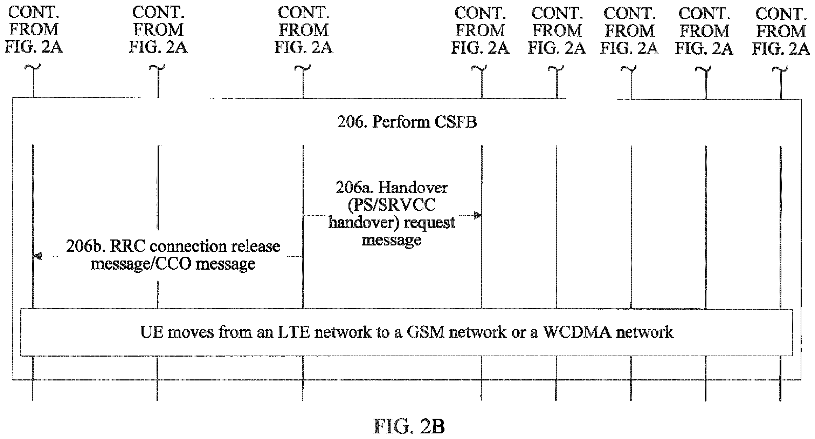

FIG. 2A and FIG. 2B are a schematic diagram of a CSFB method according to a second embodiment of the present invention. In this embodiment, a source access network device and a target access network device are connected to a same mobility management network element, and an X2 interface is deployed between the source access network device and the target access network device. The source access network device is an eNodeB 1, and the target access network device is an eNodeB 2. For a case in which the source access network device and the target access network device are connected to different mobility management network elements, and an X2 interface is deployed between the source access network device and the target access network device, refer to descriptions in this embodiment. Details are not described. In this embodiment, for content that is the same as or similar to that in the first embodiment, refer to detailed descriptions in the first embodiment. Details are not described herein again. As shown in FIG. 2A and FIG. 2B, the method in this embodiment includes the following steps.

201. UE sends an extended service request message to an MME.

Optionally, the extended service request message may be sent to the MME when the UE in an LTE network initiates a CS service (such as a voice service).

202. After the MME receives the extended service request message sent by the eNodeB 1, the MME sends an S1-AP request message to the eNodeB 1, where the S1-AP request message includes a CSFB indicator information element, and the CSFB indicator information element is used to instruct the eNodeB 1 to perform CSFB on the UE.

203. After the eNodeB 1 receives the S1-AP request message sent by the MME, the eNodeB 1 sends an S1-AP response message to the MME.

The eNodeB 1 learns, according to the S1-AP request message, that the CSFB needs to be performed on the UE. Performing the CSFB on the UE includes moving the UE from the LTE network to a GSM network or a WCDMA network.

Optionally, the eNodeB 1 learns, according to the CSFB indicator information element, that the CSFB needs to be performed on the UE.

204. The UE sends a measurement report to the eNodeB 1.

Optionally, the UE sends the measurement report to the eNodeB 1 because the UE moves to a coverage area of the eNodeB 2 or signal quality of a coverage area that is of the eNodeB 1 and in which the UE is located weakens.

205. After the eNodeB 1 receives the measurement report sent by the UE, the eNodeB 1 determines, according to the measurement report, that a serving cell handover needs to be performed on the UE in an LTE network. An X2 interface handover is performed among the UE, the eNodeB 1, the eNodeB 2, and the MME, so as to perform the serving cell handover on the UE.

Optionally, after determining that the serving cell handover needs to be performed on the UE in the LTE network, the eNodeB 1 triggers a serving cell handover preparation procedure, so as to interrupt the CSFB.

Step 205 includes the following several steps:
205a. The eNodeB 1 sends a handover request message to the eNodeB 2 by using an X2 interface, where the handover request message includes CSFB information, and the CSFB information is used to instruct the eNodeB 2 to perform the CSFB on the UE.

Optionally, the CSFB information includes the CSFB indicator information element, and the CSFB indicator information element is used to instruct the eNodeB 2 to perform the CSFB on the UE.

Optionally, the CSFB information further includes at least one of a LAI, an SRVCC-based eCSFB operation possible information element, UE radio capability information, and CSFB execution information.

205b. After the eNodeB 2 receives the handover request message sent by the eNodeB 1 by using the X2 interface, the eNodeB 2 learns, according to the CSFB information, that the CSFB needs to be performed on the UE. After the UE is handed over to a serving cell of the eNodeB 2, the eNodeB 2 sends a path switch request message to the MME, so that the MME switches a downlink user plane data path to the serving cell of the eNodeB 2, so as to complete the serving cell handover.

205c. After the MME receives the path switch request message sent by the eNodeB 2, the MME sends a path switch request acknowledgement message to the eNodeB 2. Correspondingly, the eNodeB 2 receives the path switch request acknowledgement message sent by the MME, and learns, according to the path switch request acknowledgement message, that the UE is handed over to the eNodeB 2, and the serving cell handover is completed.

206. After the X2 interface handover is completed among the UE, the eNodeB 1, the eNodeB 2, and the MME, that is, after the serving cell handover is completed, the eNodeB 2 performs the CSFB on the UE.

Step 206 includes step 206a or step 206b.

206a. The eNodeB 2 sends the handover request message to the MME.

The handover request message is used to trigger handover-based CSFB, so that the UE moves from the LTE network to the GSM network or the WCDMA network.

Optionally, the handover request message includes a handover type information element, and the handover type information element is used to indicate that a handover type is a PS handover or an SRVCC handover.

Optionally, if the eNodeB 2 determines that the UE and a network side support the PS handover, and the UE is currently performing a PS service, the handover type information element included in the handover request message sent by the eNodeB 2 to the MME is corresponding to the PS handover. The MME sends a handover command to the UE by using the eNodeB 2, so that the PS handover is performed on the UE, and the UE moves from the LTE network to the GSM network or the WCDMA network. In a PS handover process, a corresponding PS domain resource is prepared in the GSM network or the WCDMA network.

Optionally, if the eNodeB 2 determines, according to the SRVCC-based eCSFB operation possible information element or the UE radio capability information, that the UE and a network side support the SRVCC handover, the handover type included in the handover request message sent by the eNodeB 2 to the MME is corresponding to the SRVCC handover. The MME sends a handover command to the UE by using the eNodeB 2, so that the SRVCC handover is performed on the UE, and the UE moves from the LTE network to the GSM network or the WCDMA network. Before the SRVCC handover is performed on the UE, the MME and a target network side start an SRVCC handover preparation procedure, and a corresponding CS domain resource is prepared in advance in the GSM network or the WCDMA network. Therefore, a CSFB procedure can be accelerated in an SRVCC handover-based manner.

206b. The eNodeB 2 sends an RRC connection release request message or a CCO message to the UE, so as to move the UE from the LTE network to a GSM network or a WCDMA network.

Optionally, if the eNodeB 2 determines that the UE and a network side support an inter-RAT cell change order and a cell in the GSM network or the WCDMA network is an inter-RAT cell, the eNodeB 2 sends the CCO message to the UE, and the CCO message includes identifier information of the cell in the GSM network or the WCDMA network, so that the UE moves to the GSM network or the WCDMA network according to the identifier information.

Optionally, if the eNodeB 2 determines that the UE or a network side does not support the PS handover or an inter-RAT cell change order, or a redirection-based manner is used because of an operator policy configuration, or the like, the eNodeB 2 sends the RRC connection release message to the UE, and the RRC connection release message includes frequency information of the GSM network or the WCDMA network, so that the UE moves to the GSM network or the WCDMA network according to the frequency information. In the redirection-based manner, no corresponding resource needs to be prepared in advance in the GSM network or the WCDMA network. Therefore, this operation is relatively simple.

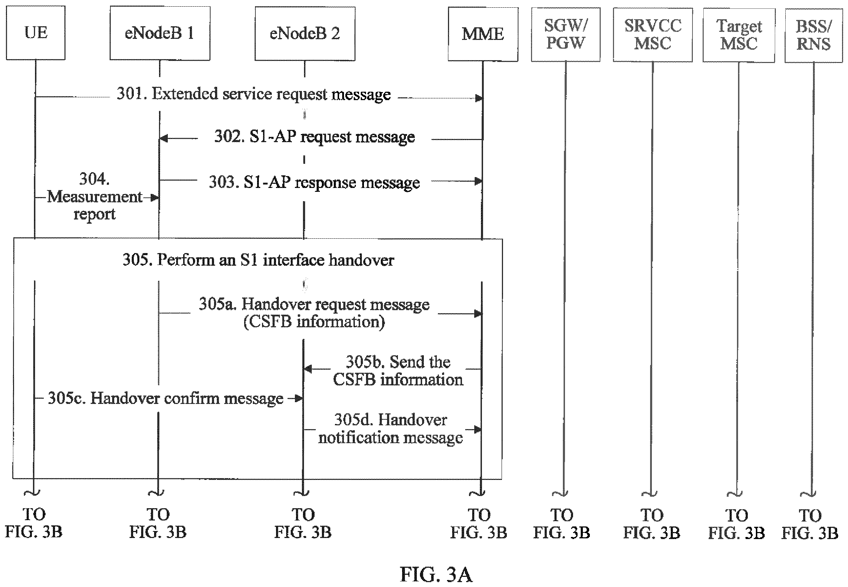

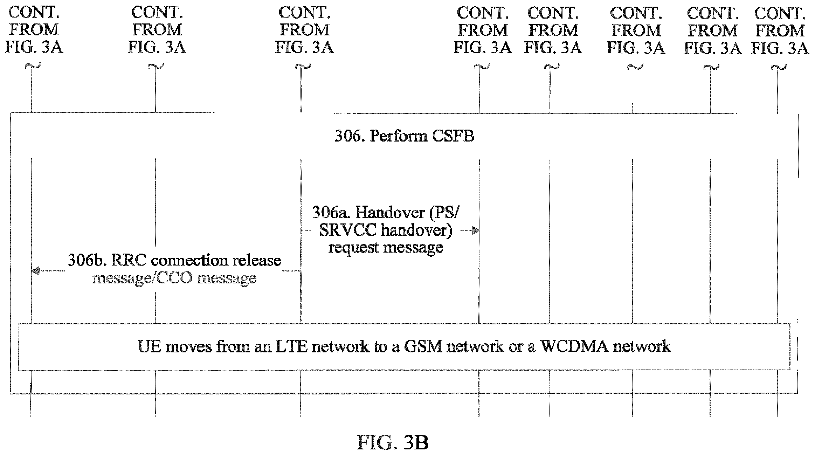

FIG. 3A and FIG. 3B are a schematic diagram of a CSFB method according to a third embodiment of the present invention. In this embodiment, a source access network device and a target access network device are connected to a same mobility management network element, and no X2 interface is deployed between the source access network device and the target access network device. The source access network device is an eNodeB 1, and the target access network device is an eNodeB 2. In this embodiment, for content that is the same as or similar to that in the first embodiment and the second embodiment, refer to detailed descriptions in the first embodiment and the second embodiment. Details are not described herein again.

Steps 301 to 304 in this embodiment are similar to steps 201 to 204 in the second embodiment, and details are not described herein again.

305. After the eNodeB 1 receives the measurement report sent by the UE, the eNodeB 1 determines, according to the measurement report, that a serving cell handover needs to be performed on the UE in an LTE network. An S1 interface handover is performed among the UE, the eNodeB 1, the eNodeB 2, and the MME, so as to perform the serving cell handover on the UE.

Step 305 includes the following several steps:
305a. The eNodeB 1 sends a handover request message to the MME by using an S1 interface, where the handover request message includes CSFB information including the CSFB indicator information element, and the CSFB information is used to instruct the eNodeB 2 to perform the CSFB on the UE.
305b. After the MME receives the handover request message sent by the eNodeB 1 by using the S1 interface, the MME sends the CSFB information to the eNodeB 2, where the CSFB information is obtained by the MME from the S1 interface handover request message, and the CSFB information is used to instruct the eNodeB 2 to perform the CSFB on the UE.
   Optionally, the MME sends the handover request message to the eNodeB 2, the handover request message includes the CSFB information, and the CSFB information is used to instruct the eNodeB 2 to perform the CSFB on the UE.
305c. After the eNodeB 2 receives the CSFB information sent by the MME, the eNodeB 2 learns, according to the CSFB information, that the CSFB needs to be performed on the UE. After the eNodeB 2 learns that the CSFB needs to be performed on the UE, the CSFB is performed on the UE after the UE is handed over to the eNodeB 2. The eNodeB 2 receives a handover confirm message sent by the UE, and the handover confirm message is used to notify the eNodeB 2 that the UE is handed over to a serving cell of the eNodeB 2.
305d. The eNodeB 2 learns, according to the handover confirm message, that the UE is handed over to the eNodeB 2, and then the eNodeB 2 sends a handover notification message to the MME, so that the MME switches a downlink user plane data path to the serving cell of the eNodeB 2.
306. After the S1 interface handover is completed among the UE, the eNodeB 1, the eNodeB 2, and the MME, that is, after the serving cell handover is completed, the eNodeB 2 performs the CSFB on the UE.

Step 306 is similar to step 206 in the second embodiment, and details are not described herein again.

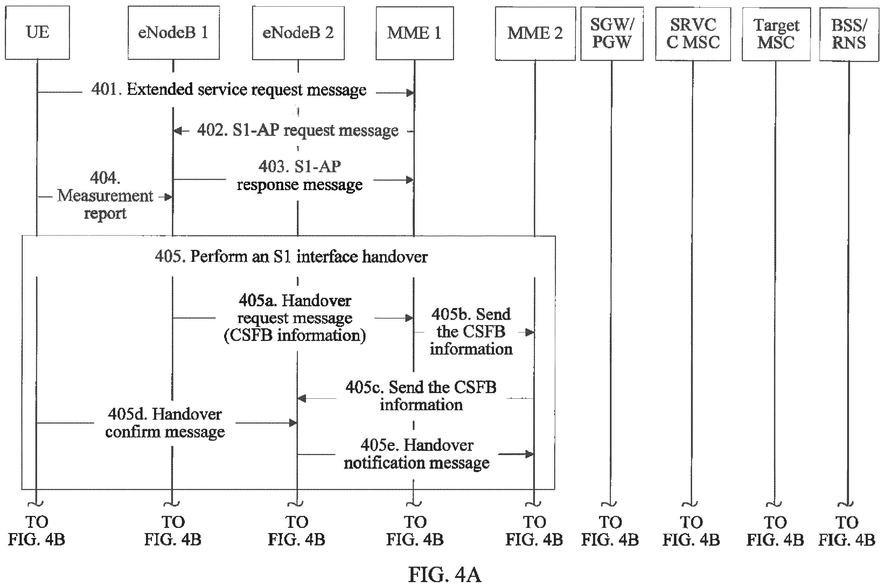

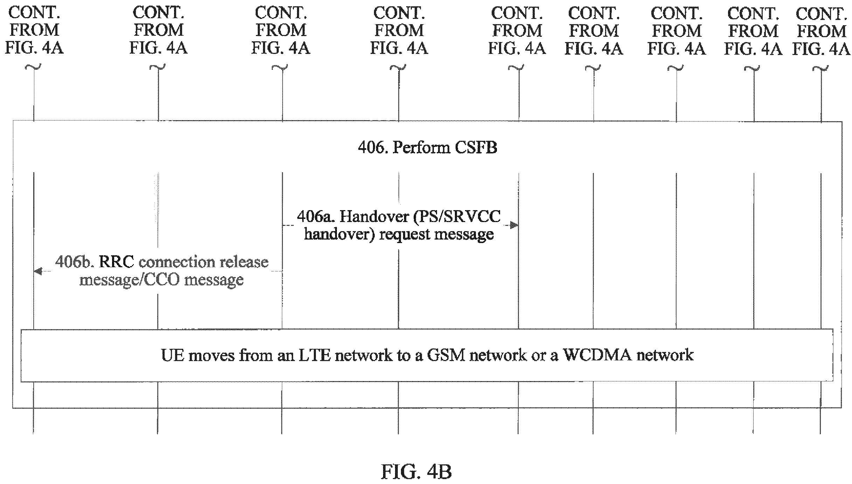

FIG. 4A and FIG 4B are a schematic diagram of a CSFB method according to a fourth embodiment of the present invention. In this embodiment, a source access network device and a target access network device are connected to different mobility management network elements, the source access network device is an eNodeB 1, the target access network device is an eNodeB 2, a source mobility management network element is an MME 1, and a target mobility management network element is an MME 2. In this embodiment, for content that is the same as or similar to that in the first embodiment, refer to detailed descriptions in the first embodiment. Details are not described herein again.

Steps 401 to 404 are similar to steps 301 to 304 in the third embodiment. The MME 1 is corresponding to the MME in the third embodiment.

Step 405 includes the following steps:
405a. The eNodeB 1 sends a handover request message to the MME 1 by using an S1 interface, where the handover request message includes CSFB information including the CSFB indicator information element, and the CSFB information is used to instruct the eNodeB 2 to perform the CSFB on the UE.
405b. After the MME receives the handover request message sent by the eNodeB 1 by using the S1 interface, the MME 1 sends, to the MME 2, the CSFB information obtained from the handover request message.
405c. The MME 2 sends the CSFB information to the eNodeB 2.
405d. After the eNodeB 2 receives the CSFB information sent by the MME 2, the eNodeB 2 learns, according to the CSFB information, that the CSFB needs to be performed on the UE. After the eNodeB 2 learns that the CSFB needs to be performed on the UE, the CSFB is performed on the UE after the UE is handed over to the eNodeB 2. The eNodeB 2 receives a handover confirm message sent by the UE, and the handover confirm message is used to notify the eNodeB 2 that the UE is handed over to a serving cell of the eNodeB 2.
405e. The eNodeB 2 learns, according to the handover confirm message, that the UE is handed over to the eNodeB 2, and then the eNodeB 2 sends a handover notification message to the MME 2, so that the MME switches a downlink user plane data path to the serving cell of the eNodeB 2.

Step 406 is similar to step 306 in the third embodiment. The MME 2 in step 406 is corresponding to the MME in step 306.

In this embodiment, the second embodiment, and the third embodiment, when the eNodeB 1 needs to perform the CSFB on the UE and needs to perform the serving cell handover on the UE, the eNodeB 1 can send the CSFB information to the eNodeB 2, so that the eNodeB 2 learns that the CSFB needs to be performed on the UE, and the eNodeB 2 can perform the CSFB on the UE after the UE is handed over to the eNodeB 2, where the eNodeB 1 and the eNodeB 2 are connected to a same mobility management network element or different mobility management network elements. Therefore, even if a CSFB procedure is interrupted by a serving cell handover procedure, a CS service (including a mobile originated service and a mobile terminated service) is not omitted.

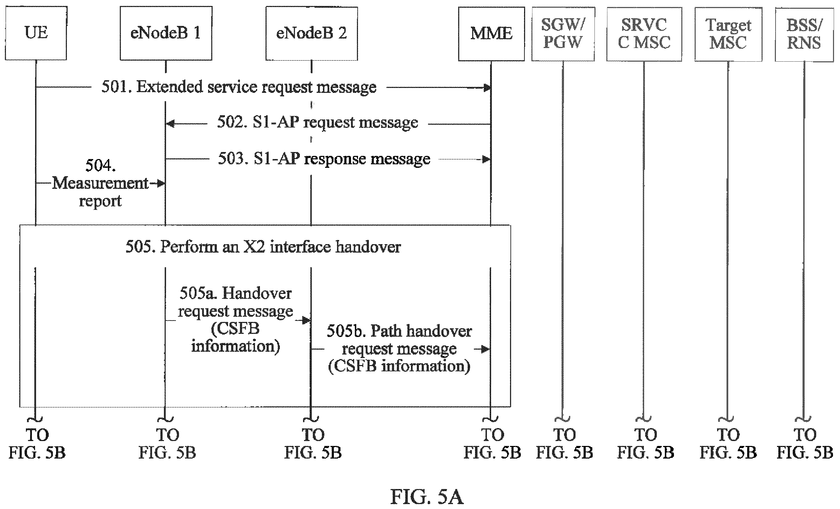

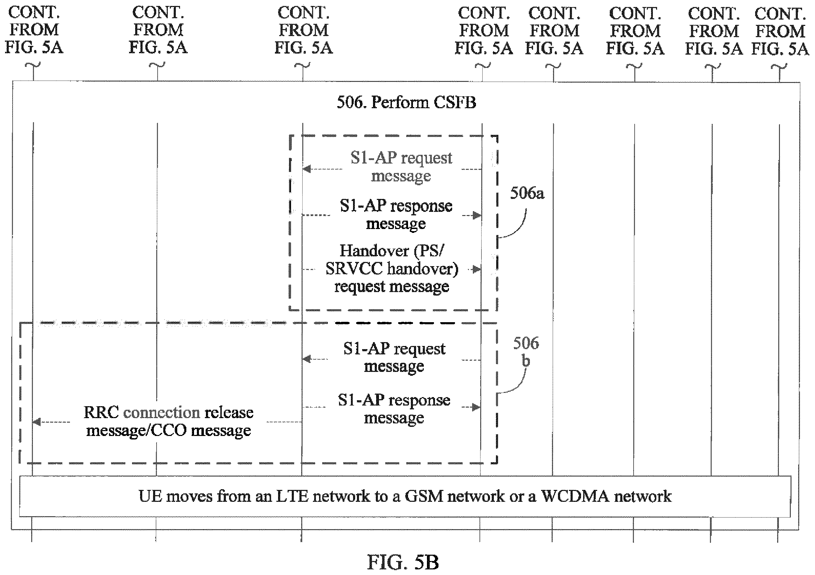

FIG. 5A and FIG. 5B are a schematic diagram of a CSFB method according to a fifth embodiment of the present invention. In this embodiment, a source access network device and a target access network device are connected to a same mobility management network element, and an X2 interface is deployed between the source access network device and the target access network device. The source access network device is an eNodeB 1, the target access network device is an eNodeB 2, and the mobility management network element is an MME. For a case in which the source access network device and the target access network device are connected to different mobility management network elements, and an X2 interface is deployed between the source access network device and the target access network device, refer to descriptions in this embodiment. Details are not described. In this embodiment, for content that is the same as or similar to that in the first embodiment, refer to detailed descriptions in the first embodiment. Details are not described herein again.

Steps 501 to 504 in this embodiment are similar to steps 201 to 204 in the second embodiment, and details are not described herein again.

505. After the eNodeB 1 receives the measurement report sent by the UE, the eNodeB 1 determines, according to the measurement report, that a serving cell handover needs to be performed on the UE in an LTE network. An X2 interface handover is performed among the UE, the eNodeB 1, the eNodeB 2, and the MME, so as to perform the serving cell handover on the UE.

Step 505 includes the following steps:
505a. The eNodeB 1 sends a handover request message to the eNodeB 2 by using an X2 interface, where the handover request message includes CSFB information, and the CSFB information is used for the eNodeB 2 to perform the CSFB on the UE.
   Optionally, the CSFB information includes a CSFB-uncompleted information element, and the CSFB-uncompleted information element is used to notify the eNodeB 2 that the eNodeB 1 has not completed the CSFB.
505b. After the eNodeB 2 receives the handover request message sent by the eNodeB 1 by using the X2 interface, the eNodeB 2 learns, according to the CSFB information, that the CSFB needs to be performed on the UE. After the UE is handed over to a serving cell of the eNodeB 2, the eNodeB 2 sends a path switch request message to the MME, so that the MME switches a downlink user plane data path to the serving cell of the eNodeB 2, so as to complete the serving cell handover. The path switch request message includes the CSFB information. Correspondingly, the MME receives the path switch request message sent by the eNodeB 2, learns, according to the path switch request message, that the UE is handed over to the eNodeB 2, and learns, according to a CSFB-uncompleted information element in the path switch request message, that the eNodeB 1 has not completed the CSFB, to determine that the CSFB needs to be performed on the UE.
506. After the X2 interface handover is completed among the UE, the eNodeB 1, the eNodeB 2, and the MME, that is, after the serving cell handover is completed, the MME initiates the CSFB on the UE.

Step 506 includes step 506a or step 506b.
506a. The MME sends S1-AP request information to the eNodeB 2, where the CSFB includes the CSFB indicator information element, so as to perform the CSFB on the UE. After receiving the S1-AP request information, the eNodeB 2 sends S1-AP response information to the MME. The eNodeB 2 sends the handover request message to the MME, so as to perform PS handover-based or SRVCC handover-based CSFB, and move the UE from the LTE network to a GSM network or a WCDMA network. Step 506a is similar to step 202, step 203, and step 206a in the second embodiment, and details are not described herein again.
506b. The MME sends S1-AP request information to the eNodeB 2, where the CSFB includes the CSFB indicator information element, so as to perform the CSFB on the UE. After receiving the S1-AP request information, the eNodeB 2 sends S1-AP response information to the MME. The eNodeB 2 sends an RRC connection release request message or a CCO message to the MME, and then the MME receives the RRC connection release request message or the CCO message sent by the eNodeB 2, so as to move the UE from the LTE network to a GSM network or a WCDMA network. Step 506b is similar to step 202, step 203, and step 206b in the second embodiment, and details are not described herein again.

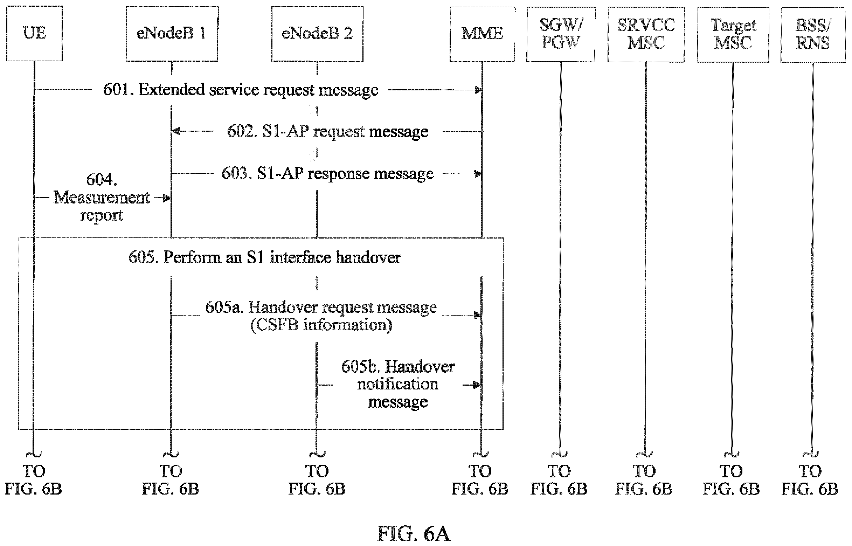

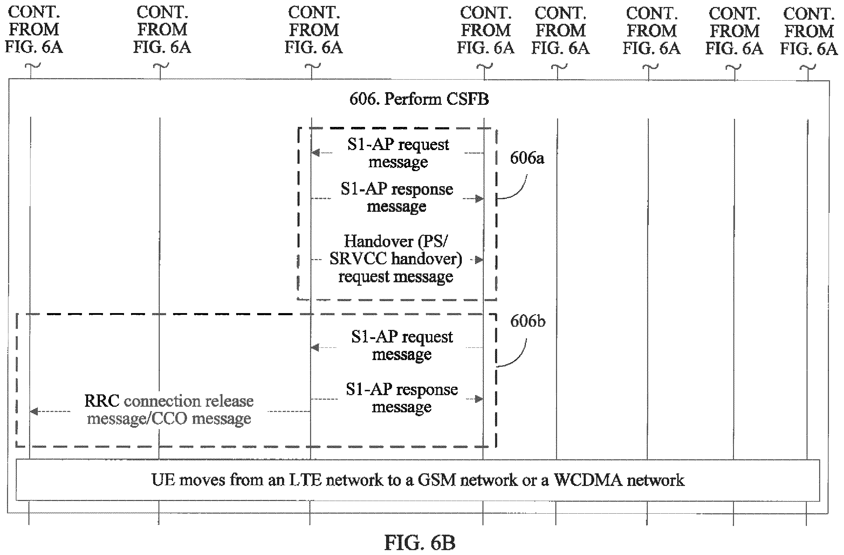

FIG. 6A and FIG. 6B are a schematic diagram of a CSFB method according to a sixth embodiment of the present invention. In this embodiment, a source access network device and a target access network device are connected to a same mobility management network element, and no X2 interface is deployed between the source access network device and the target access network device. The source access network device is an eNodeB 1, and the target access network device is an eNodeB 2. In this embodiment, for content that is the same as or similar to that in the first embodiment, refer to detailed descriptions in the first embodiment. Details are not described herein again.

Steps 601 to 604 in this embodiment are similar to steps 201 to 204 in the second embodiment, and details are not described herein again.

605. After the eNodeB 1 receives the measurement report sent by the UE, the eNodeB 1 determines, according to the measurement report, that a serving cell handover needs to be performed on the UE in an LTE network. An S1 interface handover is performed among the UE, the eNodeB 1, the eNodeB 2, and the MME, so as to perform the serving cell handover on the UE.

Step 605 includes the following steps:
605a. The eNodeB 1 sends a handover request message to the MME by using an S1 interface, where the handover request message includes CSFB information, and the CSFB information is used for the MME to perform the CSFB on the UE.
   Optionally, the CSFB information includes a CSFB-uncompleted information element. The CSFB-uncompleted information element is used to notify the MME that the eNodeB 1 has not completed the CSFB.
605b. After receiving the handover request message, the MME learns, according to the CSFB information, that the eNodeB 1 has not completed the CSFB and the CSFB needs to be performed on the UE. After the UE is handed over to a serving cell of the eNodeB 2, the eNodeB 2 sends a handover notification message to the MME. Correspondingly, the MME receives the handover notification message sent by the eNodeB 2, and learns, according to the handover notification message, that the UE is handed over to the eNodeB 2, and then the MME switches a downlink user plane data path to the serving cell of the eNodeB 2, so as to complete the serving cell handover.
606. After the S1 interface handover is completed among the UE, the eNodeB 1, the eNodeB 2, and the MME, that is, after the serving cell handover is completed, the MME initiates the CSFB on the UE.

Step 606 is similar to step 506 in the fifth embodiment, and details are not described herein again.

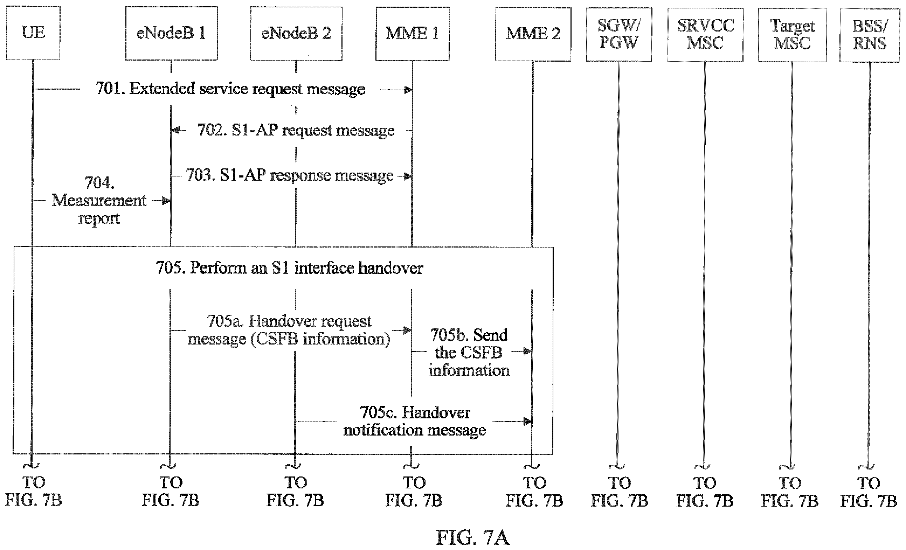

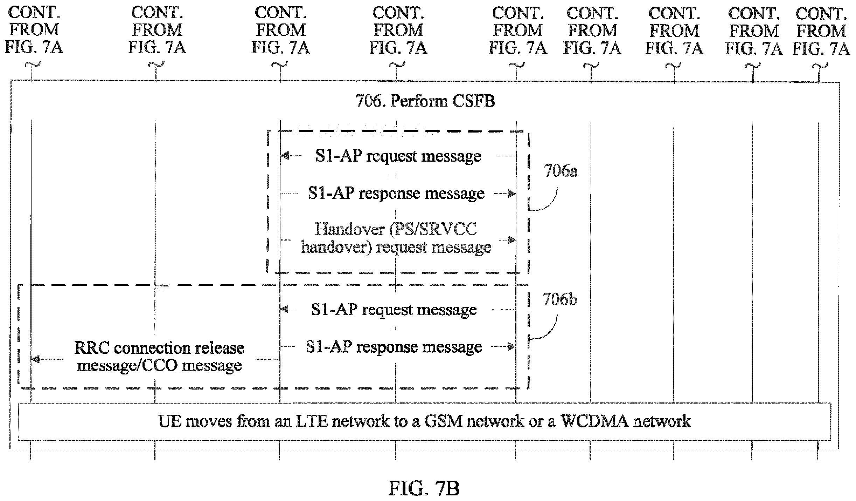

FIG 7A and FIG. 7B are a schematic diagram of a CSFB method according to a seventh embodiment of the present invention. In this embodiment, a source access network device and a target access network device are connected to different mobility management network elements. The source access network device is an eNodeB 1, the target access network device is an eNodeB 2, a source mobility management network element is an MME 1, and a target mobility management network element is an MME 2. In this embodiment, for content that is the same as or similar to that in the first embodiment, refer to detailed descriptions in the first embodiment. Details are not described herein again.

Steps 701 to 704 are similar to steps 601 to 604 in the sixth embodiment. The MME 1 is corresponding to the MME in the sixth embodiment.

705. After the eNodeB 1 receives the measurement report sent by the UE, the eNodeB 1 determines, according to the measurement report, that a serving cell handover needs to be performed on the UE in an LTE network. An S1 interface handover is performed among the UE, the eNodeB 1, the eNodeB 2, the MME 1, and the MME 2, so as to perform the serving cell handover on the UE.

Step 705 includes the following several steps:
705a. The eNodeB 1 sends a handover request message to the MME 1 by using an S1 interface, where the handover request message includes CSFB information, and the CSFB information is used for the MME 2 to perform the CSFB on the UE.
   Optionally, the CSFB information includes a CSFB-uncompleted information element. The CSFB-uncompleted information element is used to notify the MME 1 that the eNodeB 1 has not completed the CSFB.
705b. The MME 1 sends the CSFB information to the MME 2, where the CSFB information is used for the MME 2 to perform the CSFB on the UE.
   Optionally, the MME 1 sends a forward relocation request message or a forward relocation complete confirm message to the MME 2. The forward relocation request message or the forward relocation complete confirm message includes the CSFB information. Correspondingly, the MME 2 receives the forward relocation request message or the forward relocation complete confirm message sent by the MME 1, and learns, according to the forward relocation request message or the forward relocation complete confirm message, that the CSFB needs to be performed on the UE.
705c. After the UE is handed over to a serving cell of the eNodeB 2, the eNodeB 2 sends a handover notification message to the MME 2. Correspondingly, the MME 2 receives the handover notification message sent by the eNodeB 2, and learns, according to the handover notification message, that the UE is handed over to the eNodeB 2, and then the MME 2 switches a downlink user plane data path to the serving cell of the eNodeB 2, so as to complete the serving cell handover.

It should be noted that a sequence of performing step 705b and step 705c is not limited in this embodiment.

Step 706 is similar to step 606 in the sixth embodiment. The MME 2 in step 706 is corresponding to the MME in step 606.

In this embodiment, the fifth embodiment, and the sixth embodiment, when the eNodeB 1 needs to perform the CSFB on the UE and needs to perform the serving cell handover on the UE, the eNodeB 1 can send the CSFB information to a mobility management entity that is connected to the eNodeB 2, so that the mobility management entity learns that the CSFB needs to be performed on the UE, and the mobility management entity can perform the CSFB on the UE after the UE is handed over to the eNodeB 2. Therefore, even if a CSFB procedure is not completed because of a serving cell handover procedure, a CS service (including a mobile originated service and a mobile terminated service) is not omitted.

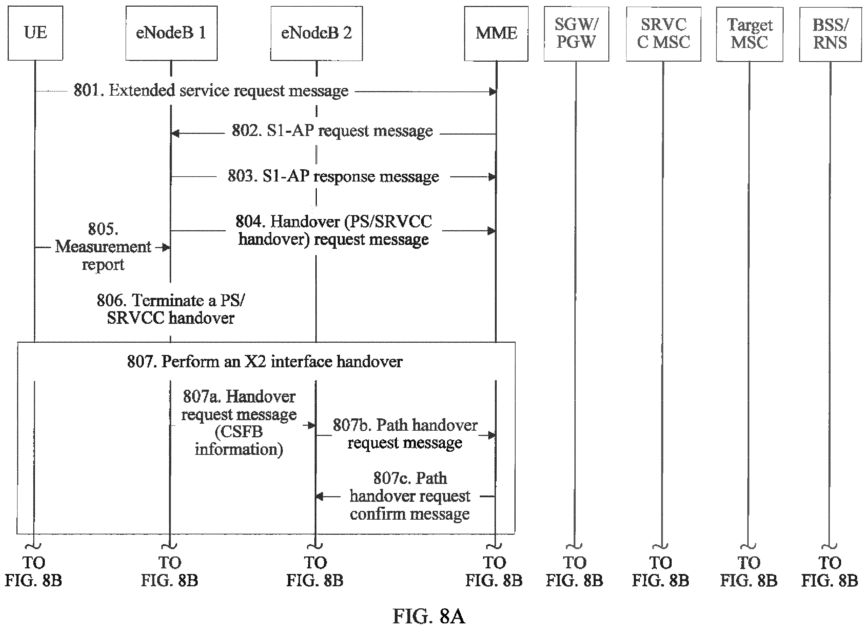

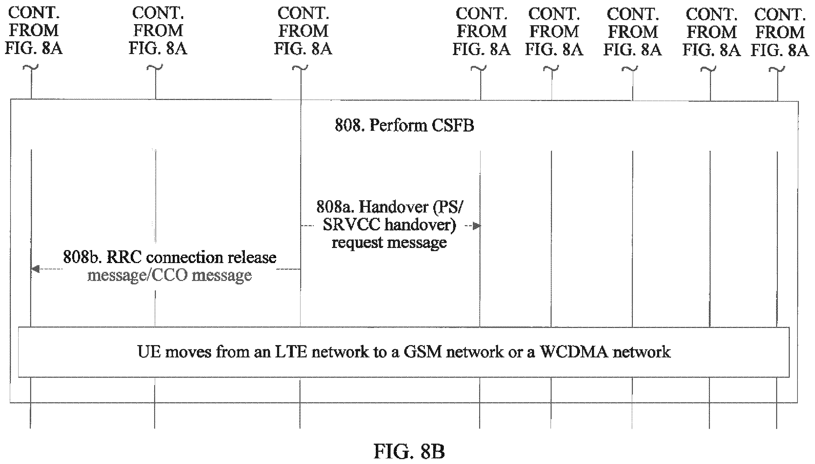

FIG. 8A and FIG. 8B are a schematic diagram of a CSFB method according to an eighth embodiment of the present invention. In this embodiment, for content that is the same as or similar to that in the first embodiment, refer to detailed descriptions in the first embodiment. Details are not described herein again.

Step 801 to step 803, step 805, step 807, and step 808 in this embodiment are similar to step 201 to step 206 in the second embodiment. A difference is that in this embodiment, the following steps are added based on the second embodiment.

804. After the eNodeB 1 sends the S1-AP response message to the MME, the eNodeB 1 sends a handover request message to the MME, where the handover request message includes a handover type information element, and the handover type information element is used to indicate that a handover type is a PS handover or an SRVCC handover.

Optionally, if the eNodeB 1 determines that the UE and a network side support the PS handover, and the UE is currently performing a PS service, the handover type information element included in the handover request message sent by the eNodeB 1 to the MME is corresponding to the PS handover. The MME sends a handover command to the UE by using the eNodeB 1, so as to perform the PS handover on the UE, so that the UE moves from the LTE network to the GSM network or the WCDMA network, and the CSFB is performed. Alternatively, if the eNodeB 1 determines, according to the SRVCC-based eCSFB operation possible information element or the terminal radio capability information, that the terminal and a network side support the SRVCC handover, the handover type information element included in the handover request message sent by the eNodeB 1 to the MME is corresponding to the SRVCC handover. The MME sends a handover command to the UE, so as to perform the SRVCC handover on the UE, so that the UE moves from the LTE network to the GSM network or the WCDMA network, and the CSFB is performed.

806. The eNodeB 1 receives the measurement report sent by the UE, and determines, according to the measurement report, that a serving cell handover needs to be performed on the UE in an LTE network, and then the eNodeB 1 terminates the PS handover or the SRVCC handover on a terminal.

Optionally, after the eNodeB 1 sends the S1-AP response message to the MME, and before the eNodeB 1 receives the measurement report sent by the UE, if the UE has started the PS handover, the eNodeB 1 terminates the PS handover on the UE after the eNodeB 1 determines that the serving cell handover needs to be performed on the UE in the LTE network, so as to interrupt the CSFB. Alternatively, after the eNodeB 1 sends the S1-AP response message to the MME, and before the eNodeB 1 receives the measurement report sent by the UE, if the UE has started the SRVCC handover, the eNodeB 1 terminates the SRVCC handover on the UE after the eNodeB 1 determines that the serving cell handover needs to be performed on the UE in the LTE network, so as to interrupt the CSFB.

Similarly, based on the third to the seventh embodiments, after the eNodeB 1 sends the S1-AP response message to the MME (or the MME 1), if the eNodeB 1 sends the handover request message to the MME (or the MME 1), the handover request message includes the handover type information element, and the handover type information element is used to indicate that the handover type is the PS handover or the SRVCC handover, the eNodeB 1 receives the measurement report sent by the UE, and determines, according to the measurement report, that the serving cell handover needs to be performed on the UE in the LTE network, and then the eNodeB 1 terminates the PS handover or the SRVCC handover on the UE.

In this embodiment, when the eNodeB 1 needs to perform the CSFB on the UE and needs to perform the serving cell handover on the UE, the eNodeB 1 can send the CSFB information to a mobility management entity that is connected to the eNodeB 2, so that the mobility management entity learns that the CSFB needs to be performed on the UE, and the mobility management entity can perform the CSFB on the UE after the UE is handed over to the eNodeB 2. Therefore, even if a CSFB procedure is not completed because of a serving cell handover procedure, a CS service (including a mobile originated service and a mobile terminated service) is not omitted. In addition, even if the UE has started a handover procedure (for example, the PS handover or the SRVCC handover) before the serving cell handover, an MME 2 can hand over the UE to a serving cell of the eNodeB 2 after the eNodeB 1 terminates the handover procedure. Therefore, the serving cell handover procedure is not shielded by handover (for example, PS handover or SRVCC handover)-based CSFB, and the UE is not disconnected from a network.

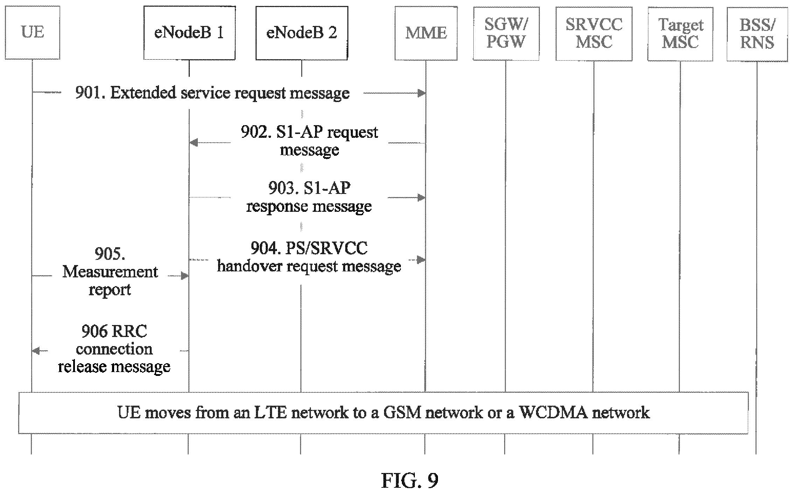

FIG. 9 is a schematic diagram of a CSFB method according to a ninth embodiment of the present invention. In this embodiment, for content that is the same as or similar to that in the first embodiment, refer to detailed descriptions in the first embodiment. Details are not described herein again. It should be noted that in this embodiment, an eNodeB 1 and an eNodeB 2 may be connected to a same MME (as shown in FIG. 9), or may be connected to different MMEs (not shown in the diagram).

Steps 901 to 905 in this embodiment are similar to steps 801 to 805 in the eighth embodiment. Step 904 may not be performed, and other content is not described in detail.

906. After the eNodeB 1 receives the measurement report sent by the UE, the eNodeB 1 determines, according to the measurement report, that a serving cell handover needs to be performed on the UE in an LTE network. When the eNodeB 1 learns that the serving cell handover needs to be performed on the UE in the LTE network, the eNodeB 1 immediately starts an emergency blind redirection process of the UE, so as to perform the CSFB on the UE. That is, the eNodeB 1 immediately sends an RRC connection release message to the UE, and the RRC connection release message includes frequency information of a GSM network or a WCDMA network, so that the UE moves from the LTE network to the GSM network or the WCDMA network according to the frequency information.

In this embodiment, when the eNodeB 1 learns that the CSFB needs to be performed on the UE and the serving cell handover needs to be performed on the UE in the LTE network, or when the UE has started handover (for example, PS handover or SRVCC handover)-based CSFB, and the serving cell handover needs to be performed on the UE in the LTE network, the eNodeB 1 can immediately start the emergency blind redirection process of the UE, so as to perform the CSFB. Therefore, according to the solution in this embodiment, it can be ensured that a CSFB procedure of the UE is not interrupted by a serving cell handover procedure, and a CS service (including a mobile originated service and a mobile terminated service) is not omitted. In addition, in an emergency blind redirection manner, because no corresponding resource needs to be prepared in advance in the GSM network or the WCDMA network, moving of the UE from the LTE network to the GSM network or the WCDMA network can be accelerated. In this way, the UE is not disconnected from a network when the UE rapidly accesses a cell in the GSM network or the WCDMA network.

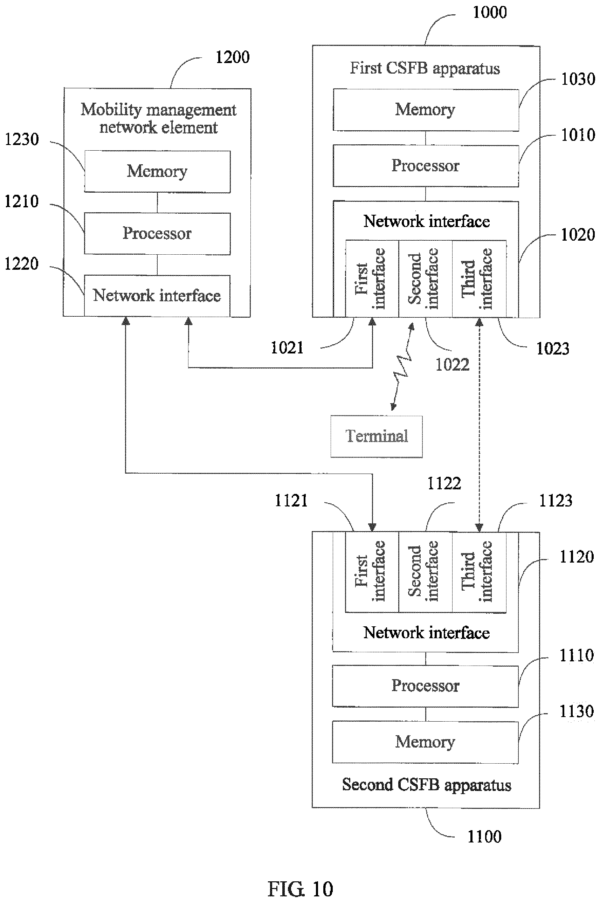

FIG. 10 is a schematic diagram of a communications system according to a tenth embodiment of the present invention. The communications system in this embodiment is a communications system of a first standard network. In this embodiment, for content that is corresponding to that in the foregoing method embodiments, refer to detailed descriptions in the foregoing method embodiments. Details are not described herein again. As shown in FIG. 10, the communications system includes a terminal, a mobility management network element, and two CSFB apparatuses. The two CSFB apparatuses are connected to a same mobility management network element.

Optionally, the communications system in this embodiment may be an LTE system, or may be a new generation mobile communications system, for example, a 5G mobile communications system, or another future mobile communications system.

A first CSFB apparatus 1000 in this embodiment may be an eNodeB in the LTE system, or may be a base station in a future communications system. Correspondingly, a second CSFB apparatus 1100 in this embodiment may be an eNodeB in the LTE system, or may be a base station in a future communications system.

In FIG. 10, the two CSFB apparatuses are the first CSFB apparatus 1000 and the second CSFB apparatus 1100. The first CSFB apparatus 1000 includes a processor 1010 and a network interface 1020, and the network interface 1020 includes a first interface 1021 and a second interface 1022. The first interface 1021 may be an S1 interface. The second interface 1022 may be an air interface, a transceiver, or a transceiver circuit, but is not limited thereto. The second interface 1022 may be connected to an antenna device of the first CSFB apparatus 1000. Alternatively, the second interface 1022 may include an antenna device of the first CSFB apparatus 1000. The first CSFB apparatus 1000 is connected to a mobility management network element 1200 by using the first interface 1021. The first CSFB apparatus 1000 communicates with a terminal by using the second interface 1022. When an X2 interface is deployed between the first CSFB apparatus 1000 and the second CSFB apparatus 1100, the network interface 1020 may further include a third interface 1023. The first CSFB apparatus 1000 is connected to the second CSFB apparatus 1100 by using the third interface 1023. The third interface 1023 may be an X2 interface.

The second CSFB apparatus 1100 includes a processor 1110 and a network interface 1120, and the network interface 1120 includes a first interface 1121 and a second interface 1122. The first interface 1121 may be an S1 interface. The second interface 1122 may be an air interface, a transceiver, or a transceiver circuit, but is not limited thereto. The second interface 1122 may be connected to an antenna device of the second CSFB apparatus 1100. Alternatively, the second interface 1122 may include an antenna device of the second CSFB apparatus 1100. The second CSFB apparatus 1100 is connected to the mobility management network element 1200 by using the first interface 1121. The second CSFB apparatus 1100 communicates with the terminal by using the second interface 1122. When an X2 interface is deployed between the first CSFB apparatus 1000 and the second CSFB apparatus 1100, the network interface 1120 may further include a third interface 1123. The second CSFB apparatus 1100 is connected to the first CSFB apparatus 1000 by using the third interface 1123. The third interface 1123 may be an X2 interface.

The mobility management network element 1200 includes a processor 1210 and a network interface 1220. The network interface 1220 may be an S1 interface. The mobility management network element 1200 is connected to the first CSFB apparatus 1000 by using the network interface 1220, and is further connected to the second CSFB apparatus 1100 by using the network interface 1220.

The network interface 1220 of the mobility management network element 1200 is configured to send CSFB instruction information to the first CSFB apparatus 1000, and the CSFB instruction information is used to instruct the first CSFB apparatus 1000 to perform CSFB on the terminal. The CSFB instruction information may include a CSFB indicator information element, and the CSFB indicator information element is used to instruct the first CSFB apparatus 1000 to perform the CSFB on the terminal. For example, the network interface 1220 is specifically configured to send an S1-AP request message to the first CSFB apparatus 1000, and the S1-AP request message includes the CSFB indicator information element.

Optionally, the network interface 1220 is further configured to send the S1-AP request message to the first CSFB apparatus 1200 again when the network interface 1220 fails to receive an S1-AP response message sent by the first CSFB apparatus 1000.

Optionally, before sending the S1-AP request message to the first CSFB apparatus 1000, the network interface 1220 is further configured to receive an extended service request sent by the terminal.

Optionally, in a process of handing over the terminal from the first CSFB apparatus 1000 to the second CSFB apparatus 1100, the network interface 1220 is configured to receive CSFB information that is sent by the first CSFB apparatus 1000 and that includes the CSFB indicator information element. After receiving the CSFB information that is sent by the first CSFB apparatus 1000 and that includes the CSFB indicator information element, the network interface 1220 is further configured to send the CSFB information including the CSFB indicator information element to the second CSFB apparatus 1100. The CSFB information including the CSFB indicator information element is used to instruct the second CSFB apparatus 1100 to perform the CSFB on the terminal after the terminal is handed over to the second CSFB apparatus 1100. For example, the network interface 1220 is specifically configured to receive a third handover request message sent by the first CSFB apparatus 1000, and the handover request message includes the CSFB information including the CSFB indicator information element. After receiving the third handover request message sent by the first CSFB apparatus 1000, the network interface 1220 is further specifically configured to send the CSFB information including the CSFB indicator information element to the second CSFB apparatus 1100.

Optionally, in a process of handing over the terminal from the first CSFB apparatus 1000 to the second CSFB apparatus 1100, the network interface 1220 receives CSFB information that is sent by the first CSFB apparatus 1000 and that includes a CSFB-uncompleted information element. The CSFB information including the CSFB-uncompleted information element is used to instruct the mobility management network element 1220 to initiate the CSFB on the terminal after the terminal is handed over to the second CSFB apparatus 1100.

Optionally, after the terminal is handed over to the second CSFB apparatus 1100, the network interface 1220 is configured to receive a handover notification message sent by the second CSFB apparatus 1100.

Optionally, after the processor 1210 initiates the CSFB on the terminal, the network interface 1220 is further configured to send an S1-AP request message to the second CSFB apparatus 1100, so that the second CSFB apparatus 1100 learns that the CSFB needs to be performed on the terminal again.

Optionally, when the processor 1210 initiates the CSFB on the terminal in a PS handover-based manner or an SRVCC handover-based manner, the network interface 1220 is further configured to receive a first handover request message sent by the second CSFB apparatus 1100, and the first handover request message is used to trigger a PS handover or an SRVCC handover on the terminal.

Optionally, after the network interface 1220 receives the third handover request message sent by the first CSFB apparatus 1000, the processor 1210 of the mobility management network element 1200 is configured to learn, according to CSFB information that is included in the handover request message and that includes the CSFB-uncompleted information element, that the CSFB needs to be performed on the terminal.

Optionally, after the network interface 1220 receives a path switch request message sent by the second CSFB apparatus 1100, the processor 1210 is configured to: learn that the terminal is handed over to a serving cell of the second CSFB apparatus 1100; switch a downlink user plane data path to the serving cell of the second CSFB apparatus 1100, so as to complete a cell handover; and learn, according to CSFB information that is included in the path switch request message and that includes the CSFB-uncompleted information element, that the CSFB needs to be performed on the terminal.

Optionally, after the network interface 1220 receives the handover notification message sent by the second CSFB apparatus 1100, the processor 1210 is configured to: learn, according to the handover notification message, that the terminal is handed over to the second CSFB apparatus 1100, and switch a downlink user plane data path to a serving cell of the second CSFB apparatus 1100, so as to complete a serving cell handover.

Optionally, after the network interface 1220 receives the CSFB information including the CSFB-uncompleted information element, the processor 1210 is further configured to initiate the CSFB on the terminal after the terminal is handed over to the second CSFB apparatus 1100. For a specific implementation process in which the processor 1210 initiates the CSFB on the terminal, refer to corresponding descriptions in step 103 in the first embodiment. Details are not described herein again.

Optionally, the processor 1210 is further configured to perform the CSFB on the terminal after the terminal is handed over to the second CSFB apparatus 1100. For example, the processor 1210 performs the CSFB on the terminal after the terminal is handed over to the second CSFB apparatus 1100, when the processor 1210 initiates the CSFB on the terminal in the PS handover-based manner or the SRVCC handover-based manner, and after the network interface 1220 receives the first handover request message sent by the second CSFB apparatus 1100.

The processor 1010 of the first CSFB apparatus 1000 is configured to: learn that the CSFB needs to be performed on the terminal, and move the terminal from a first standard network to a second standard network when the CSFB is performed on the terminal; and before completing moving of the terminal from the first standard network to the second standard network, learn that the serving cell handover needs to be performed on the terminal in the first standard network; and is further configured to perform the serving cell handover on the terminal.

Optionally, after the first interface 1021 receives the S1-AP request message sent by the mobility management network element 1200, the processor 1010 is specifically configured to learn, according to the S1-AP request message, that the CSFB needs to be performed on the terminal.

Optionally, after the first interface 1021 sends the S1-AP response message to the mobility management network element 1200, the processor 1010 is configured to perform the CSFB on the terminal according to at least one of a LAI, an SRVCC-based eCSFB operation possible information element, and terminal radio capability information included in the S1-AP request message and by using one of the following manners: a PS handover-based manner, an SRVCC handover-based manner, an inter-RAT cell change order-based manner, or a redirection-based manner. For a specific implementation process of the several manners, refer to corresponding descriptions in the first embodiment. Details are not described herein again.

Optionally, after the second interface 1022 receives a measurement report sent by the terminal, the processor 1010 is specifically configured to determine, according to the measurement report, that the serving cell handover needs to be performed on the terminal in the first standard network. For example, the processor 1010 is specifically configured to: determine, according to the measurement report, that the terminal meets a handover condition of the serving cell handover, and then determine that the serving cell handover needs to be performed on the terminal in the first standard network. Optionally, after the first interface 1021 sends the S1-AP response message to the mobility management network element 1200, and before the processor 1010 determines that the serving cell handover needs to be performed on the terminal in the first standard network, when it is determined that the terminal starts neither the PS handover nor the SRVCC handover, the processor 1010 is further configured to: determine that the serving cell handover needs to be performed on the terminal in the first standard network, and then prepare a corresponding resource for handing over the terminal to the serving cell of the second CSFB apparatus 1100, so as to interrupt the CSFB.

Optionally, after the first interface 1021 sends the S1-AP response message to the mobility management network element 1200, and before the processor 1010 determines that the serving cell handover needs to be performed on the terminal in the first standard network, when it is determined that the terminal has started the PS handover, the processor 1010 is further configured to terminate the PS handover on the terminal after determining that the serving cell handover needs to be performed on the terminal in the first standard network, so as to interrupt the CSFB. Alternatively, after the first interface 1021 sends the S1-AP response message to the mobility management network element 1200, and before the processor 1010 determines that the serving cell handover needs to be performed on the terminal in the first standard network, when it is determined that the terminal has started the SRVCC handover, the processor 1010 is further configured to terminate the SRVCC handover on the terminal after determining that the serving cell handover needs to be performed on the terminal in the first standard network, so as to interrupt the CSFB.

Optionally, before the network interface 1020 sends the CSFB information to the second CSFB apparatus 1100, the processor 1010 is further configured to determine whether an X2 interface is deployed between the first CSFB apparatus 1000 and the second CSFB apparatus 1100.

The network interface 1020 of the first CSFB apparatus 1000 is configured to send the CSFB information to the second CSFB apparatus 1100 in a process of the serving cell handover, and the CSFB information is used to instruct the second CSFB apparatus 1100 to perform the CSFB on the terminal. Optionally, the network interface 1020 may be configured to send the CSFB information to the mobility management network element 1200 in a process of the serving cell handover, and the CSFB information is used for the mobility management network element 1200 to initiate the CSFB on the terminal after the terminal is handed over to the second CSFB apparatus 1100.

Optionally, the network interface 1020 may be configured to send the CSFB information to the second CSFB apparatus 1100 before the serving cell handover or after the serving cell handover.

The first interface 1021 of the network interface 1020 is configured to receive the S1-AP request message sent by the mobility management network element 1200, and the S1-AP request message includes the CSFB indicator information element.

Optionally, the first interface 1021 is further configured to send the S1-AP response message to the mobility management network element 1200 after receiving the S1-AP request message sent by the mobility management network element 1200.

Optionally, after the first interface 1021 sends the S1-AP request message to the mobility management network element 1200, when the processor 1010 performs the CSFB on the terminal in the PS handover-based manner or the SRVCC handover-based manner, the first interface 1021 is configured to send a first handover request message to the mobility management network element, and the first handover request message is used to trigger the PS handover or the SRVCC handover on the terminal.

Optionally, after the processor 1010 determines that the second CSFB apparatus 1100 and the first CSFB apparatus 1000 are connected to the same mobility management network element 1200, and no X2 interface is deployed between the first CSFB apparatus 1000 and the second CSFB apparatus 1100, the first interface 1021 is specifically configured to send the third handover request message to the mobility management network element 1200, and the third handover request message includes the CSFB information including the CSFB indicator information element.

Optionally, after the processor 1010 determines, according to the measurement report sent by the terminal, that the second CSFB apparatus 1100 and the first CSFB apparatus 1000 are connected to the same mobility management network element 1200, and no X2 interface is deployed between the first CSFB apparatus 1000 and the second CSFB apparatus 1100, the first interface 1021 is specifically configured to send the third handover request message to the mobility management network element 1200, and the third handover request message includes the CSFB information including the CSFB-uncompleted information element.

Before the processor 1010 completes moving of the terminal from the first standard network to the second standard network, the second interface 1022 of the network interface 1020 is configured to receive the measurement report sent by the terminal. Optionally, after the first interface 1021 sends the S1-AP request message to the mobility management network element 1200, when the processor 1010 performs the CSFB on the terminal in the inter-RAT cell change order-based manner or the redirection-based manner, the second interface 1022 is configured to send a CCO message or an RRC connection release message to the terminal.

Optionally, after the processor 1010 determines, according to the measurement report, that the serving cell handover needs to be performed on the terminal in the first standard network, the second interface 1022 is further configured to immediately send the RRC connection release message to the terminal, and the RRC connection release message includes frequency information of the second standard network, so that the UE moves from an LTE network to the second standard network according to the frequency information.

Optionally, after the processor 1010 determines that the second CSFB apparatus 1100 and the first CSFB apparatus 1000 are connected to the same mobility management network element 1200, and an X2 interface is deployed between the first CSFB apparatus 1000 and the second CSFB apparatus 1100, the third interface 1023 of the network interface 1020 is configured to send a second handover request message to the second CSFB apparatus 1100, and the second handover request message includes the CSFB information including the CSFB indicator information element.

Optionally, after the processor 1010 determines that the second CSFB apparatus 1100 and the first CSFB apparatus 1000 are connected to the same mobility management network element 1200, and an X2 interface is deployed between the first CSFB apparatus 1000 and the second CSFB apparatus 1100, the third interface 1023 is configured to send the CSFB information including the CSFB-uncompleted information element to the second CSFB apparatus 1100 in the process of performing the serving cell handover on the terminal, and the CSFB information including the CSFB-uncompleted information element is used for the mobility management network element 1200 to initiate the CSFB on the terminal after the terminal is handed over to the second CSFB apparatus 1100. For example, the third interface 1023 is specifically configured to send a second handover request message to the second CSFB apparatus 1100, and the second handover request message includes the CSFB information including the CSFB-uncompleted information element.

The network interface 1120 of the second CSFB apparatus 1100 is configured to receive, in the process of performing the serving cell handover on the terminal, the CSFB information sent by the first CSFB apparatus 1000, and the CSFB information is used to instruct the second CSFB apparatus 1100 to perform the CSFB on the terminal.

When the second CSFB apparatus 1100 and the first CSFB apparatus 1000 are connected to the same mobility management network element 1200, and no X2 interface is deployed between the first CSFB apparatus 1000 and the second CSFB apparatus 1100, the first interface 1121 of the network interface 1120 is configured to receive the CSFB information that is sent by the mobility management network element 1200 and that includes the CSFB indicator information element. The CSFB information including the CSFB indicator information element is obtained after the mobility management network element 1200 receives the third handover request message sent by the first CSFB apparatus 1000. The third handover request message includes the CSFB information including the CSFB indicator information element.

Optionally, after the third interface 1123 receives the second handover request message sent by the first CSFB apparatus 1100, the first interface 1121 is configured to send the CSFB information including the CSFB-uncompleted information element to the mobility management network element 1200. The second handover request message includes the CSFB information including the CSFB-uncompleted information element.

Optionally, after the terminal is handed over to the serving cell of the second CSFB apparatus 1100, the first interface 1121 is further configured to send the path switch request message to the mobility management network element 1200, so that the mobility management network element 1200 switches the downlink user plane data path to a serving cell of a target access network device, so as to complete the serving cell handover. For example, after the third interface 1123 receives the second handover request message sent by the first CSFB apparatus 1000, the first interface 1121 is further specifically configured to send the path switch request message to the mobility management network element 1200. The path switch request message includes the CSFB information including the CSFB-uncompleted information element. The CSFB-uncompleted information element is used to notify the mobility management network element 1200 that the first CSFB apparatus 1000 has not completed the CSFB. Alternatively, after the terminal is handed over to the serving cell of the second CSFB apparatus, the first interface 1121 is further configured to send the handover notification message to the mobility management network element 1200. For example, the first interface 1121 is further specifically configured to send the handover notification message to the mobility management network element 1200 after the mobility management network element 1200 receives the third handover request message sent by the first CSFB apparatus 1000.

Optionally, after the terminal is handed over to the serving cell of the second CSFB apparatus 1100, the first interface 1121 is further configured to receive a path switch request acknowledgement message sent by the mobility management network element 1200. For example, after the first interface 1121 sends the path switch request message to the mobility management network element 1200, the first interface 1121 is further specifically configured to receive the path switch request acknowledgement message sent by the mobility management network element 1200.

Optionally, after the first interface 1121 sends the path switch request message or the handover notification message to the mobility management network element 1200, the first interface 1121 is further configured to receive the S1-AP request message sent by the mobility management network element 1200. The S1-AP request message includes the CSFB indicator information element. The S1-AP request message further includes at least one of a LAI, an SRVCC-based eCSFB operation possible information element, terminal radio capability information, and CSFB execution mode information.

After the terminal is handed over to the serving cell of the second CSFB apparatus 1100, the second interface 1122 of the network interface 1120 is configured to receive a handover confirm message or an RRC reconfiguration complete message sent by the terminal.

When the second CSFB apparatus 1100 and the first CSFB apparatus 1000 are connected to the same mobility management network element 1200, and an X2 interface is deployed between the first CSFB apparatus 1000 and the second CSFB apparatus 1100, the third interface 1123 of the network interface 1120 is configured to receive the second handover request message sent by the first CSFB apparatus 1000, and the second handover request message includes the CSFB information including the CSFB indicator information element.

Optionally, the third interface 1123 is configured to receive, in the process of performing the serving cell handover on the terminal, the CSFB information that is sent by the first CSFB apparatus 1000 and that includes the CSFB-uncompleted information element, and the CSFB information is used for the mobility management network element 1200 to initiate the CSFB on the terminal after the terminal is handed over to the second CSFB apparatus 1100. For example, the third interface 1123 is specifically configured to receive, in the process of performing the serving cell handover on the terminal, the second handover request message sent by the first CSFB apparatus 1000, and the second handover request message includes the CSFB instruction information including the CSFB-uncompleted information element.

Optionally, the network interface 1120 further includes a fourth interface (not shown), and the fourth interface is configured to: after the terminal is handed over to the serving cell of the second CSFB apparatus 1100, receive downlink user plane data information sent by a gateway device.

The processor 1110 of the second CSFB apparatus 1100 is configured to perform the CSFB on the terminal according to the CSFB information after the terminal is handed over to the second CSFB apparatus 1100.

Optionally, after the first interface 1121 receives the CSFB information that is sent by the mobility management network element 1200 and that includes the CSFB indicator information element, or after the third interface 1123 receives the second handover request message sent by the first CSFB apparatus 1000, the processor 1110 is specifically configured to learn that the CSFB needs to be performed on the terminal. The second handover request message includes the CSFB information including the CSFB indicator information element.

Optionally, after the first interface 1121 receives the path switch request acknowledgement message sent by the mobility management network element 1200, the processor 1110 is specifically configured to learn, according to the path switch request acknowledgement message, that the terminal is handed over to the second CSFB apparatus 1100.

Optionally, after the second interface 1122 receives the handover confirm message or the RRC reconfiguration complete message sent by the terminal, the processor 1110 is specifically configured to learn, according to the handover confirm message or the RRC reconfiguration complete message, that the terminal is handed over to the second CSFB apparatus 1100.

Optionally, after the fourth interface receives the downlink user plane data information sent by the gateway device, the processor 1110 is specifically configured to learn, according to the downlink user plane data information, that the terminal is handed over to the second CSFB apparatus 1100.

Optionally, after the terminal is handed over to the second CSFB apparatus 1100, the processor 1110 is specifically configured to perform the CSFB on the terminal according to the at least one of the LAI, the SRVCC-based eCSFB operation type information element, the terminal radio capability information, and the CSFB execution mode information in the CSFB information after the CSFB information including the CSFB indicator information element is received. For specific implementation in which the processor 1110 performs the CSFB on the terminal, refer to corresponding descriptions in the first embodiment. Details are not described herein again.

Optionally, after the first interface 1121 receives the S1-AP request message sent by the mobility management network element 1200, the processor 1110 is further configured to learn, according to the S1-AP request message, that the CSFB needs to be performed on the terminal again.

Optionally, after learning that the CSFB needs to be performed on the terminal again, the processor 1110 is further configured to perform the CSFB on the terminal according to the at least one of the LAI, the SRVCC-based eCSFB operation possible information element, the terminal radio capability information, and the CSFB execution mode information included in the S1-AP request message. For a specific implementation process in which the processor 1110 performs the CSFB on the terminal, refer to corresponding descriptions in step 103 in the first embodiment. Details are not described herein again.

Optionally, the network interface 1020 of the first CSFB apparatus 1000 is configured to perform a signal receiving process and a signal sending process of the source access network device in the methods shown in FIG. 1, FIG. 2A, FIG. 2B, FIG. 3A, FIG. 3B, FIG. 5A, FIG. 5B, FIG. 6A, FIG. 6B, FIG. 8A, FIG. 8B, and FIG. 9, and the processor 1010 is configured to perform a signal processing process of the source access network device in the methods shown in FIG. 1, FIG. 2A, FIG. 2B, FIG. 3A, FIG. 3B, FIG. 5A, FIG. 5B, FIG. 6A, FIG. 6B, FIG. 8A, FIG. 8B, and FIG. 9. The network interface 1120 of the second CSFB apparatus 1100 is configured to perform a signal receiving process and a signal sending process of the target access network device in the methods shown in FIG. 1, FIG. 2A, FIG. 2B, FIG. 3A, FIG. 3B, FIG. 5A, FIG. 5B, FIG. 6A, FIG. 6B, FIG. 8A, FIG. 8B, and FIG. 9, and the processor 1110 is configured to perform a signal processing process of the target access network device in the methods shown in FIG. 1, FIG. 2A, FIG. 2B, FIG. 3A, FIG. 3B, FIG. 5A, FIG. 5B, FIG. 6A, FIG. 6B, FIG. 8A, FIG. 8B, and FIG. 9. The network interface 1220 of the mobility management network element 1200 is configured to perform an information receiving process and an information sending process of the mobility management network element in the methods shown in FIG. 1, FIG 2A, FIG. 2B, FIG. 3A, FIG. 3B, FIG. 5A, FIG. 5B, FIG. 6A, FIG. 6B, FIG. 8A, FIG. 8B, and FIG. 9, and the processor 1210 is configured to perform a signal processing process of the mobility management network element in the methods shown in FIG. 1, FIG. 2A, FIG. 2B, FIG. 3A, FIG. 3B, FIG. 5A, FIG 5B, FIG. 6A, FIG. 6B, FIG. 8A, FIG. 8B, and FIG. 9.

Further, the first CSFB apparatus 1000 may further include a memory 1030. The memory 1030 is configured to store a processor-executable instruction. The instruction stored in the memory 1030 may enable the processor 1010 to perform the methods shown in FIG. 1, FIG. 2A, FIG. 2B, FIG 3A, FIG. 3B, FIG. 5A, FIG. 5B, FIG. 6A, FIG. 6B, FIG. 8A, FIG. 8B, and FIG. 9. For example:
The processor-executable instruction stored in the memory 1030 enables the processor 1030 to perform the following operations: learning that CSFB needs to be performed on a terminal, where performing the CSFB on the terminal includes moving the terminal from a first standard network to a second standard network; determining, before completing moving of the terminal from the first standard network to the second standard network, that a serving cell handover needs to be performed on the terminal in the first standard network; and performing the serving cell handover on the terminal, where the performing the serving cell handover on the terminal includes: sending CSFB information to the second CSFB apparatus 1100, where the CSFB information is used to instruct the second CSFB apparatus 1100 to perform the CSFB on the terminal.

Further, the second CSFB apparatus 1100 may further include a memory 1130. The memory 1130 is configured to store a processor-executable instruction. The instruction stored in the memory 1130 may enable the processor 1110 to perform the methods shown in FIG. 1, FIG. 2A, FIG. 2B, FIG. 3A, FIG. 3B, FIG. 5A, FIG. 5B, FIG. 6A, FIG. 6B, FIG 8A, FIG. 8B, and FIG. 9. For example:
The processor-executable instruction stored in the memory 1130 enables the processor 1130 to perform the following operations: receiving, in a process of performing a serving cell handover on a terminal, CSFB information sent by the first CSFB apparatus 1000, where the CSFB information is used to instruct the second CSFB apparatus 1100 to perform CSFB on the terminal; and performing the CSFB on the terminal according to the CSFB information after the terminal is handed over to the second CSFB apparatus 1100.

Further, the mobility management network element 1200 may further include a memory 1230. The memory 1230 is configured to store a processor-executable instruction. The instruction stored in the memory 1230 may enable the processor 1210 to perform the methods shown in FIG. 1, FIG. 2A, FIG 2B, FIG. 3A, FIG. 3B, FIG. 5A, FIG 5B, FIG. 6A, FIG. 6B, FIG. 8A, FIG. 8B, and FIG. 9. For example:
The processor-executable instruction stored in the memory 1230 enables the processor 1230 to perform the following operations: sending CSFB instruction information to the first CSFB apparatus 1000, where the CSFB instruction information is used to instruct the first CSFB apparatus 1000 to perform CSFB on a terminal; if the first CSFB apparatus 1000 performs a serving cell handover on the terminal in a first standard network before completing moving of the terminal from the first standard network to a second standard network, receiving, in a process of handing over the terminal from the first CSFB apparatus 1000 to the second CSFB apparatus 1100, CSFB information sent by the first CSFB apparatus 1000; and sending the CSFB information to the second CSFB apparatus 1100, where the CSFB information is used to instruct the second CSFB apparatus 1100 to perform the CSFB on the terminal.

Optionally, this embodiment of the present invention further provides a computer storage medium or a computer program product for storing the processor-executable instruction stored in the memory 1030, the memory 1130, or the memory 1230.

Optionally, the memory may be a storage unit, and the processor may be a processing unit.

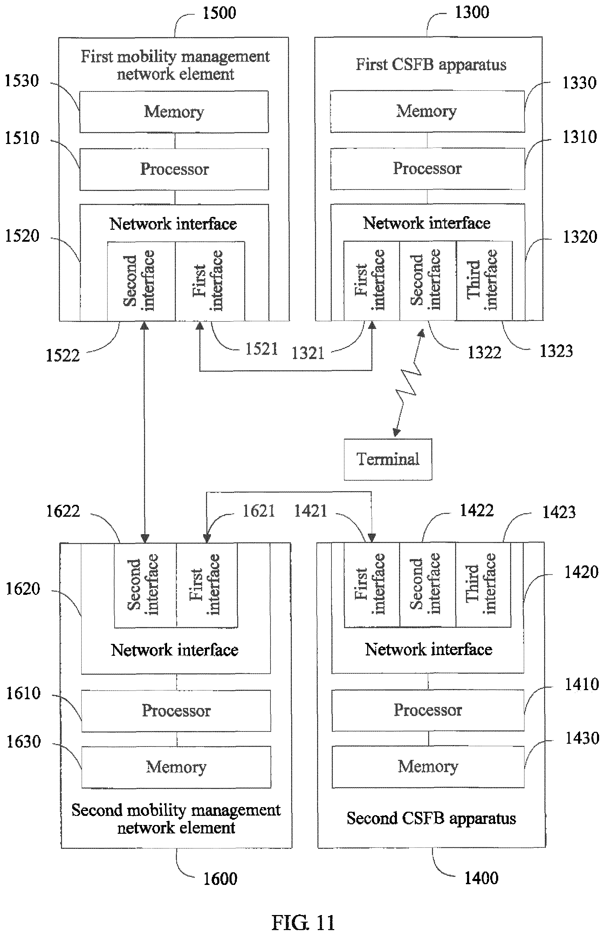

FIG 11 is a schematic diagram of a communications system according to an eleventh embodiment of the present invention. The communications system in this embodiment is a communications system of a first standard network. In this embodiment, for content that is corresponding to that in the foregoing method embodiments, refer to detailed descriptions in the foregoing method embodiments. Details are not described herein again. As shown in FIG. 11, the communications system includes a terminal, two mobility management network elements, and two CSFB apparatuses.

In this embodiment, a first CSFB apparatus 1300 is similar to the first CSFB apparatus 1000 in the tenth embodiment. A second CSFB apparatus 1400 is similar to the second CSFB apparatus 1100 in the tenth embodiment. A first mobility management network element 1500 includes a processor 1510 and a network interface 1520, and the network interface 1520 includes a first interface 1521 and a second interface 1520. The first interface 1521 may be an S1 interface. The second interface 1522 may be an S10 interface. The first mobility management network element 1500 is connected to the first CSFB apparatus 1300 by using the first interface 1521, and is connected to a second mobility management network element 1600 by using the second interface 1522. The second mobility management network element 1600 includes a processor 1610 and a network interface 1620, and the network interface 1620 includes a first interface 1621 and a second interface 1622. The first interface 1621 may be an S1 interface. The second interface 1622 may be an S10 interface. The second mobility management network element is connected to the second CSFB apparatus 1400 by using the first interface 1621, and is connected to the first mobility management network element 1500 by using the second interface 1622.

According to descriptions in the method embodiments 1 to 9, in this embodiment, for functions that are of elements of the first CSFB apparatus 1400, the second CSFB apparatus 1400, and the first mobility management network element 1500 and that are the same as those of elements of the first CSFB apparatus 1000, the second CSFB apparatus 1100, and the mobility management network element 1200 in the tenth embodiment, refer to descriptions in the tenth embodiment. Details are not described herein again.

When a processor 1310 determines that the first CSFB apparatus 1300 and the second CSFB apparatus 1400 are separately connected to different mobility management network elements, a first interface 1321 of the first CSFB apparatus 1300 is configured to send CSFB information to the first mobility management network element 1500 in a process of performing a serving cell handover on a terminal. For example, the first interface 1321 of the first CSFB apparatus 1300 sends a third handover request message to the first mobility management network element, and the third handover request message includes the CSFB information.

The network interface 1520 of the first mobility management network element 1500 is configured to receive the CSFB information sent by the first CSFB apparatus 1300.

Optionally, the first interface 1521 in the network interface 1520 is configured to receive the third handover request message sent by the first CSFB apparatus, and the third handover request message includes the CSFB information.

Optionally, after the first interface 1521 receives the CSFB information sent by the first CSFB apparatus, the second interface 1522 in the network interface 1520 is configured to send the CSFB information to the second mobility management network element 1600 in the process of performing the serving cell handover on the terminal.

Optionally, the second interface 1522 is specifically configured to send a forward relocation request message or a forward relocation complete confirm message to the second mobility management network element 1600 after receiving the CSFB information sent by the first CSFB apparatus 1300. The forward relocation request message or the forward relocation complete confirm message includes the CSFB information.

The second interface 1622 of the second mobility management network element 1600 is configured to receive, in the process of performing the serving cell handover on the terminal, the CSFB information sent by the first mobility management network element 1500.

Optionally, the second interface 1622 is specifically configured to receive the forward relocation request message or the forward relocation complete confirm message sent by the first mobility management network element. The forward relocation request message or the forward relocation complete confirm message includes the CSFB information.

Optionally, the CSFB information includes a CSFB indicator information element, and the CSFB indicator information element is used to instruct the second CSFB apparatus 1400 to perform CSFB on the terminal. Alternatively, the CSFB information includes a CSFB-uncompleted information element, and the CSFB-uncompleted information element is used to notify the second mobility management network element 1600 that the first CSFB apparatus 1300 has not completed CSFB. Optionally, the CSFB information further includes at least one of a LAI, an SRVCC-based eCSFB operation possible information element, terminal radio capability information, and CSFB execution mode information.

After the second interface 1622 receives the CSFB information that is sent by the first mobility management network element 1500 and that includes the CSFB indicator information element, the first interface 1621 of the second mobility management network element 1600 is configured to send the CSFB information including the CSFB indicator information element to the second CSFB apparatus 1400.

Optionally, after the second CSFB apparatus 1400 receives the CSFB information including the CSFB indicator information element, when the CSFB is performed on the terminal in a PS handover-based manner or an SRVCC handover-based manner, the first interface 1621 of the second mobility management network element 1600 is configured to receive a first handover request message sent by the second CSFB apparatus 1400.

Optionally, after the terminal is handed over to a serving cell of the second CSFB apparatus 1400, the first interface 1621 of the second mobility management network element 1600 is configured to receive a handover notification message sent by the second CSFB apparatus 1400.

After a first interface 1423 receives the CSFB information that is sent by the second mobility management network element 1600 and that includes the CSFB indicator information element, a processor 1410 of the second CSFB apparatus 1400 is configured to perform the CSFB on the terminal according to the at least one of the LAI, the SRVCC-based eCSFB operation possible information element, the terminal radio capability information, and the CSFB execution mode information. For a specific implementation process, refer to corresponding descriptions in the method embodiments. Details are not described herein again.

Optionally, after the terminal is handed over to the second CSFB apparatus 1400, and the second CSFB apparatus 1400 receives the CSFB information including the CSFB indicator information element, the processor 1610 of the second mobility management network element 1600 is configured to perform the CSFB on the terminal in the PS handover-based manner or the SRVCC handover-based manner.

After the second interface 1622 receives the CSFB information that is sent by the first mobility management network element 1500 and that includes the CSFB-uncompleted information element, the processor 1610 of the second mobility management network element 1600 is configured to initiate the CSFB on the terminal after the terminal is handed over to the second CSFB apparatus 1400. For a specific implementation process in which the processor 1610 initiates the CSFB on the terminal, refer to detailed descriptions in the method embodiments. Details are not described herein again.

Optionally, after the first interface 1621 receives the handover notification message sent by the second CSFB apparatus 1400, the processor 1610 of the second mobility management network element 1600 is configured to: learn, according to the handover notification message, that the terminal is handed over to the second CSFB apparatus 1400, and switch a downlink user plane data path to the serving cell of the second CSFB apparatus 1400, so as to complete the serving cell handover.

Optionally, a network interface 1320 of the first CSFB apparatus 1300 is configured to perform a signal receiving process and a signal sending process of the source access network device in the methods shown in FIG. 1, FIG. 4A, FIG. 4B, FIG. 7A, and FIG. 7B, and the processor 1310 is configured to perform a signal processing process of the source access network device in the methods shown in FIG. 1, FIG. 4A, FIG 4B, FIG. 7A, and FIG. 7B. A network interface 1420 of the second CSFB apparatus 1400 is configured to perform a signal receiving process and a signal sending process of the target access network device in the methods shown in FIG. 1, FIG. 4A, FIG 4B, FIG. 7A, and FIG. 7B, and the processor 1410 is configured to perform a signal processing process of the target access network device in the methods shown in FIG. 1, FIG. 4A, FIG. 4B, FIG. 7A, and FIG. 7B. The network interface 1520 of the first mobility management network element 1500 is configured to perform a signal receiving process and a signal sending process of the source mobility management network element in the methods shown in FIG 1, FIG. 4A, FIG. 4B, FIG. 7A, and FIG. 7B, and the processor 1510 is configured to perform a signal processing process of the source mobility management network element in the methods shown in FIG. 1, FIG. 4A, FIG. 4B, FIG. 7A, and FIG. 7B. The network interface 1620 of the second mobility management network element 1600 is configured to perform a signal receiving process and a signal sending process of the target mobility management network element in the methods shown in FIG. 1, FIG. 4A, FIG. 4B, FIG. 7A, and FIG. 7B, and the processor 1610 is configured to perform a signal processing process of the target mobility management network element in the methods shown in FIG. 1, FIG. 4A, FIG. 4B, FIG. 7A, and FIG. 7B.

Further, the second mobility management network element 1600 may further include a memory 1630. The memory 1630 is configured to store a processor-executable instruction. The instruction stored in the memory 630 may enable the processor 1610 to perform the signal processing process in the methods shown in FIG. 1, FIG. 4A, FIG. 4B, FIG 7A, and FIG. 7B. For example:
The processor-executable instruction stored in the memory 1630 enables the processor 1630 to perform the following operations: receiving, in a process of performing a serving cell handover on a terminal, CSFB information sent by the first mobility management network element 1500; sending the CSFB information to the second CSFB apparatus 1400, where the CSFB information is used to instruct the second CSFB apparatus 1400 to perform CSFB on the terminal; and after the terminal is handed over to the second CSFB apparatus 1400, receiving a handover request message sent by the second CSFB apparatus, and performing the CSFB on the terminal.

Alternatively, the processor-executable instruction stored in the memory 1630 enables the processor 1630 to perform the following operations: receiving, in a process of performing a serving cell handover on a terminal, CSFB information sent by the first mobility management network element 1500, where the CSFB information is used to instruct the second mobility management network element 1600 to initiate CSFB on the terminal; and initiating the CSFB on the terminal after the terminal is handed over to the second CSFB apparatus 1400.

Optionally, this embodiment of the present invention further provides a computer storage medium or a computer program product for storing the processor-executable instruction stored in the memory 1630.

Optionally, the memory may be a storage unit, and the processor may be a processing unit.

In the tenth embodiment and the eleventh embodiment of this application, the processor may directly obtain a signal from a corresponding network interface, or may indirectly obtain a signal from a corresponding network interface by using an intermediate element (for example, a filter or a coupler). Correspondingly, the processor may directly provide a signal for the corresponding network interface, or may indirectly provide a signal for the corresponding network interface by using the intermediate element (for example, a filter or a coupler).

In the tenth embodiment and the eleventh embodiment of this application, the processor may be one processor, or may be multiple processors with a same function or different functions. The memory may be one memory, or may include multiple memories of a same type or different types.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A circuit switched fallback CSFB method, comprising:
learning, by a source access network device, that CSFB needs to be performed on a terminal, wherein performing the CSFB on the terminal comprises moving the terminal from a first standard network to a second standard network;
determining, by the source access network device before completing moving of the terminal from the first standard network to the second standard network, that a serving cell handover needs to be performed on the terminal in the first standard network; and
performing, by the source access network device, the serving cell handover on the terminal; wherein
the performing, by the source access network device, the serving cell handover on the terminal comprises:
sending, by the source access network device, CSFB information to a target access network device, wherein the CSFB information is used to instruct the target access network device to perform the CSFB on the terminal.

2. The method according to claim 1, wherein the learning, by a source access network device, that CSFB needs to be performed on a terminal comprises:
receiving, by the source access network device, a request message sent by a mobility management network element, wherein the request message comprises a CSFB indicator information element, and the CSFB indicator information element is used to instruct the source access network device to perform the CSFB on the terminal; and
learning, by the source access network device according to the request message, that the CSFB needs to be performed on the terminal.

3. The method according to claim 2, wherein after the receiving, by the source access network device, a request message sent by a mobility management network element, the method further comprises:
sending, by the source access network device, a response message of the request message to the mobility management network element.

4. The method according to claim 3, wherein the determining, by the source access network device before completing moving of the terminal from the first standard network to the second standard network, that a serving cell handover needs to be performed on the terminal in the first standard network comprises:
receiving, by the source access network device before completing moving of the terminal from the first standard network to the second standard network, a measurement report sent by the terminal; and
determining, by the source access network device according to the measurement report, that the serving cell handover needs to be performed on the terminal in the first standard network.

5. The method according to claim 3 or 4, wherein
after the sending, by the source access network device, the response message to the mobility management network element, and before the determining, by the source access network device, that a serving cell handover needs to be performed on the terminal in the first standard network, the method further comprises:
sending, by the source access network device, a first handover request message to the mobility management network element, wherein the first handover request message is used to trigger a packet switched PS handover on the terminal; and
after the determining, by the source access network device, that a serving cell handover needs to be performed on the terminal in the first standard network, the method further comprises:
terminating, by the source access network device, the PS handover on the terminal; or
after the sending, by the source access network device, the response message to the mobility management network element, and before the determining, by the source access network device, that a serving cell handover needs to be performed on the terminal in the first standard network, the method further comprises:
sending, by the source access network device, a first handover request message to the mobility management network element, wherein the first handover request message is used to trigger a single radio voice call continuity SRVCC handover on the terminal; and
after the determining, by the source access network device, that a serving cell handover needs to be performed on the terminal in the first standard network, the method further comprises:
terminating, by the source access network device, the SRVCC handover on the terminal.

6. The method according to any one of claims 1 to 5, wherein the sending, by the source access network device, CSFB information to a target access network device comprises:
sending, by the source access network device, a second handover request message to the target access network device by using an X2 interface, wherein the second handover request message comprises the CSFB information.

7. The method according to any one of claims 2 to 5, wherein the sending, by the source access network device, CSFB information to a target access network device comprises:
sending, by the source access network device, a third handover request message to the mobility management network element by using an S 1 interface, so that the mobility management network element sends the CSFB information to the target access network device, wherein the third handover request message comprises the CSFB information.

8. The method according to any one of claims 2 to 7, wherein the CSFB information comprises the CSFB indicator information element.

9. The method according to claim 8, wherein the CSFB information further comprises at least one of a location area identity LAI, an SRVCC-based enhanced circuit switched fallback eCSFB operation possible information element, terminal radio capability information, and CSFB execution mode information.

10. The method according to any one of claims 2 to 5 or 7 to 9, wherein the request message sent by the mobility management network element and received by the source access network device comprises: an S1 interface Application Protocol S1-AP user context update request message or an S1-AP initial user context setup request message.

11. The method according to any one of claims 3 to 5 or 7 to 9, wherein the response message sent by the source access network device to the mobility management network element comprises:
an S1-AP user context update response message or an S1-AP initial user context setup response message.

12. The method according to any one of claims 1 to 11, wherein the first standard network comprises a Long Term Evolution LTE network, and the second standard network comprises a Global System for Mobile Communications GSM network or a Wideband Code Division Multiple Access WCDMA network.

13. A circuit switched fallback CSFB method, comprising:
receiving, by a target access network device in a process of a serving cell handover of a terminal, CSFB information sent by a source access network device, wherein the CSFB information is used to instruct the target access network device to perform CSFB on the terminal; and
performing, by the target access network device, the CSFB on the terminal according to the CSFB information after the terminal is handed over to the target access network device.

14. The method according to claim 13, wherein the receiving, by a target access network device in a process of a serving cell handover of a terminal, CSFB information sent by a source access network device comprises:
receiving, by the target access network device, a handover request message sent by the source access network device by using an X2 interface, wherein the handover request message comprises the CSFB information.

15. The method according to claim 13, wherein the receiving, by a target access network device in a process of a serving cell handover of a terminal, CSFB information sent by a source access network device comprises:
receiving, by the target access network device, the CSFB information sent by the source access network device by using a mobility management network element.

16. The method according to any one of claims 13 to 15, wherein the performing, by the target access network device, the CSFB according to the CSFB information after the terminal is handed over to the target access network device comprises:
receiving, by the target access network device, a handover confirm message or a radio resource control RRC reconfiguration complete message sent by the terminal; and
learning, by the target access network device according to the handover confirm message or the RRC reconfiguration complete message, that the terminal is handed over to the target access network device, and then performing the CSFB according to the CSFB information; or
receiving, by the target access network device, downlink user plane data information sent by a gateway device; and
learning, by the target access network device according to the downlink user plane data information, that the terminal is handed over to the target access network device, and then performing the CSFB according to the CSFB information.

17. The method according to any one of claims 13 to 16, wherein the CSFB information comprises a CSFB indicator information element, and the CSFB indicator information element is used to instruct the target access network device to perform the CSFB on the terminal.

18. The method according to claim 17, wherein the CSFB information further comprises at least one of a location area identity LAI, an SRVCC-based enhanced circuit switched fallback eCSFB operation possible information element, terminal radio capability information, and CSFB execution mode information.

19. The method according to claim 18, wherein the performing, by the target access network device, the CSFB on the terminal according to the CSFB information after the terminal is handed over to the target access network device comprises:
performing, by the target access network device, the CSFB on the terminal according to the at least one of the LAI, the SRVCC-based eCSFB operation possible information element, the terminal radio capability information, and the CSFB execution mode information after the terminal is handed over to the target access network device.

20. A circuit switched fallback CSFB apparatus, comprising a processor and a network interface, wherein
the processor is configured to: learn that CSFB needs to be performed on a terminal, and move the terminal from a first standard network to a second standard network when the CSFB is performed on the terminal; and before completing moving of the terminal from the first standard network to the second standard network, determine that a serving cell handover needs to be performed on the terminal in the first standard network; and is further configured to perform the serving cell handover on the terminal; and
the network interface is configured to send CSFB information to a target access network device in a process of the serving cell handover, wherein the CSFB information is used to instruct the target access network device to perform the CSFB on the terminal.

21. The apparatus according to claim 20, wherein the network interface comprises a first interface, wherein
the first interface is configured to receive a request message sent by a mobility management network element, wherein the request message comprises a CSFB indicator information element, and the CSFB indicator information element is used to instruct the CSFB apparatus to perform the CSFB on the terminal; and
the processor is specifically configured to learn, according to the request message, that the CSFB needs to be performed on the terminal.

22. The apparatus according to claim 21, wherein
the first interface is further configured to send a response message of the request message to the mobility management network element.

23. The apparatus according to claim 22, wherein the network interface further comprises a second interface, wherein
the second interface is configured to: before the processor completes moving of the terminal from the first standard network to the second standard network, receive a measurement report sent by the terminal; and
the processor is specifically configured to determine, according to the measurement report, that the serving cell handover needs to be performed on the terminal in the first standard network.

24. The apparatus according to claim 22 or 23, wherein
the first interface is further configured to: after the first interface sends the response message to the mobility management network element, and before the processor determines that the serving cell handover needs to be performed on the terminal in the first standard network, send a first handover request message to the mobility management network element, wherein the first handover request message is used to trigger a packet switched PS handover on the terminal; and
the processor is further configured to terminate the PS handover on the terminal after determining that the serving cell handover needs to be performed on the terminal; or
the first interface is further configured to: after the first interface sends the response message to the mobility management network element, and before the processor determines that the serving cell handover needs to be performed on the terminal in the first standard network, send a first handover request message to the mobility management network element, wherein the first handover request message is used to trigger a single radio voice call continuity SRVCC handover on the terminal; and
the processor is further configured to terminate the SRVCC handover on the terminal after determining that the serving cell handover needs to be performed on the terminal.

25. The apparatus according to any one of claims 21 to 24, wherein the network interface further comprises a third interface, wherein
the third interface is configured to send a second handover request message to the target access network device, wherein the second handover request message comprises the CSFB information.

26. The apparatus according to any one of claims 21 to 24, wherein the first interface is specifically configured to send a third handover request message to the mobility management network element, so that the mobility management network element sends the CSFB information to the target access network device, wherein the third handover request message comprises the CSFB information.

27. The apparatus according to any one of claims 21 to 26, wherein the network interface is specifically configured to send, to the target access network device, the CSFB information that comprises the CSFB indicator information element.

28. The apparatus according to claim 27, wherein the CSFB information further comprises at least one of a location area identity LAI, an SRVCC-based enhanced circuit switched fallback eCSFB operation possible information element, terminal radio capability information, and CSFB execution mode information.

29. A circuit switched fallback CSFB apparatus, comprising a processor and a network interface, wherein
the network interface is configured to receive, in a process of a serving cell handover of a terminal, CSFB information sent by a source access network device, wherein the CSFB information is used to instruct the CSFB apparatus to perform CSFB on the terminal; and
the processor is configured to perform the CSFB on the terminal according to the CSFB information after the terminal is handed over to the CSFB apparatus.

30. The apparatus according to claim 29, wherein the network interface comprises a first interface, wherein
the first interface is configured to receive the CSFB information sent by the source access network device by using a mobility management network element.

31. The apparatus according to claim 29, wherein the network interface comprises a second interface, wherein
the second interface is configured to receive a handover confirm message or a radio resource control RRC reconfiguration complete message sent by the terminal; and
the processor is specifically configured to learn, according to the handover confirm message or the RRC reconfiguration complete message, that the terminal is handed over to the CSFB apparatus; or
the network interface comprises a fourth interface, wherein the fourth interface is configured to receive downlink user plane data information sent by a gateway device; and
the processor is specifically configured to learn, according to the downlink user plane data information, that the terminal is handed over to the CSFB apparatus.

32. The apparatus according to claim 29, wherein the network interface comprises a third interface, wherein
the third interface is configured to receive a handover request message sent by the source access network device, wherein the handover request message comprises the CSFB information.

33. The apparatus according to any one of claims 29 to 32, wherein the CSFB information received by the network interface comprises a CSFB indicator information element, and the CSFB indicator information element is used to instruct the CSFB apparatus to perform the CSFB on the terminal.

34. The apparatus according to claim 33, wherein the CSFB information received by the network interface further comprises at least one of a location area identity LAI, an SRVCC-based enhanced circuit switched fallback eCSFB operation possible information element, terminal radio capability information, and CSFB execution mode information; and
the processor is specifically configured to perform the CSFB on the terminal according to the at least one of the LAI, the SRVCC-based eCSFB operation possible information element, the terminal radio capability information, and the CSFB execution mode information.
